(19) Europäisches Patentamt
European Patent Office
Office européen des brevets

(11) **EP 4 297 442 A1**

(12) **EUROPEAN PATENT APPLICATION**
published in accordance with Art. 153(4) EPC

(43) Date of publication:
**27.12.2023 Bulletin 2023/52**

(21) Application number: **21913830.2**

(22) Date of filing: **09.12.2021**

(51) International Patent Classification (IPC):
**H04W 4/33** (2018.01)        **G01S 5/02** (2010.01)

(52) Cooperative Patent Classification (CPC):
**G01S 5/02; H04W 4/33; H04W 64/00**

(86) International application number:
**PCT/CN2021/136881**

(87) International publication number:
**WO 2022/143089 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.12.2020 CN 202011636500**

(71) Applicant: **Huawei Technologies Co., Ltd.
Shenzhen, Guangdong 518129 (CN)**

(72) Inventors:
• **XU, Haowei
Shenzhen, Guangdong 518129 (CN)**
• **DONG, Wei
Shenzhen, Guangdong 518129 (CN)**
• **XUE, Qingfeng
Shenzhen, Guangdong 518129 (CN)**
• **WANG, Erli
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **INDOOR POSITIONING METHOD, AND TERMINAL AND SYSTEM**

(57) An indoor positioning method, a terminal, and a system are provided, relate to the field of positioning technologies, and may implement three-dimensional spatial positioning. The method specifically includes: A first electronic device includes at least three antennas that are fastened in the first electronic device and that are configured to send and receive UWB signals, any two of the at least three antennas have a distance difference in a vertical direction and/or a horizontal direction, a distance between any two of the at least three antennas is less than or equal to a threshold, and the first electronic device determines a navigation coordinate system based on a structural relationship between the at least three antennas; and after the first electronic device receives a request of a second electronic device for measuring a location, the first electronic device measures a distance between the second electronic device and the first electronic device, determines a direction of the second electronic device relative to the first electronic device by using differences between phases in which a UWB signal sent by the second electronic device arrives at the at least three antennas, and determines coordinates of the second electronic device in the navigation coordinate system based on the distance and the direction.

| First electronic device (UWB base station) | Second electronic device (UWB tag) |
|---|---|
| S1300: Establish a U system | S1301: Measurement instruction |
| | S1302a: Request to measure an initial location of the second electronic device |
| | S1302b: When the second electronic device is in the initial location and is in a preset posture, start IMU measurement to measure posture data of the second electronic device in a b system |
| S1303: Measure | |
| | S1304: Send the initial location measured by the first electronic device |
| | S1305: Calculate an initial posture of the second electronic device in the U system based on the initial location obtained through UWB measurement, and calculate a conversion matrix between the U system and the b system |

FIG. 13

Processed by Luminess, 75001 PARIS (FR)

**Description**

This application claims priority to Chinese Patent Application No. 202011636500.6, filed with the China National Intellectual Property Administration on December 31, 2020 and entitled "INDOOR POSITIONING METHOD, TERMINAL, AND SYSTEM", which is incorporated herein by reference in its entirety.

**TECHNICAL FIELD**

This application relates to the field of positioning technologies, and in particular, to an indoor positioning method, a terminal, and a system.

**BACKGROUND**

With rapid development of the smart home, a space perception capability of a smart device becomes an important development trend of the smart home. After the space perception capability of the smart device is enabled, space interaction between a user and the smart device and between smart devices can greatly improve use experience in the smart home.

In the smart home, an ultra-wideband (Ultra-Wide Band, UWB)-based indoor positioning system (UWB system for short) is usually used to provide a space perception capability for an indoor smart device (for example, a universal remote control or a mobile phone). When a UWB system is established, at least three UWB base stations need to be installed indoors and a coordinate system of the UWB system needs to be established. Then, according to a triangulation positioning principle, differences between time points at which a UWB signal transmitted by a UWB tag (that is, a device to be positioned) separately arrives at the three UWB base stations are calculated, to obtain a location of the UWB tag.

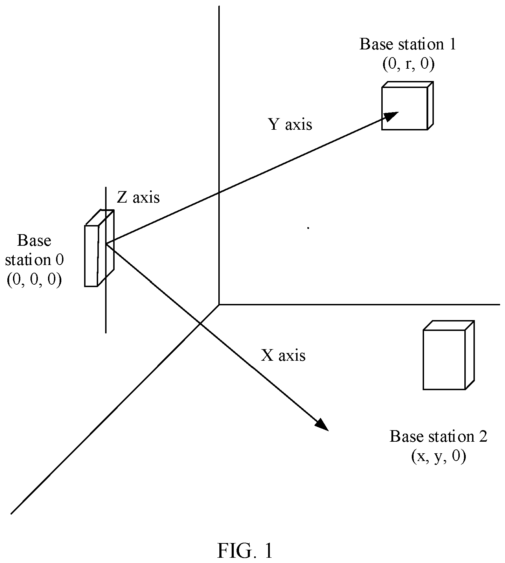

As shown in FIG. 1, when the coordinate system of the UWB system is established, distances between the three UWB base stations are first measured. Then, one UWB base station (denoted as a base station 0) is used as an origin of the coordinate system, a connection line between the base station 0 and another UWB base station (denoted as a base station 1) is used as a Y axis of the coordinate system, and a direction from the base station 0 to the base station 1 is a positive direction of the Y axis. That is, coordinates of the base station 1 are (0, r, 0), where r is a distance between the base station 0 and the base station 1. Then, an X axis is determined on a plane on which the three base stations (namely, the base station 0, the base station 1, and a base station 2) are located, and it is specified that the base station 2 is located in a positive direction of the X axis of the coordinate system. AZ axis of the coordinate system is perpendicular to an XOY plane, but a positive direction of the Z axis cannot be determined. That is, coordinates of the base station 2 are (x, y, 0), where x and y may be calculated based on a distance and a direction between the base station 2 and the base station 0, and a distance and a direction between the base station 2 and the base station 1.

It may be noted that this method for establishing the coordinate system of the UWB system cannot determine the direction of the Z axis, and therefore, only two-dimensional positioning of the UWB tag on a horizontal plane can be implemented, but three-dimensional spatial positioning cannot be implemented. It can be learned that the existing positioning solution for a UWB system needs to be improved.

**SUMMARY**

According to an indoor positioning method, a terminal, and a system provided in this application, a specific coordinate system may be determined based on an antenna structure configured by a first electronic device, and coordinates of a second electronic device in the coordinate system may be obtained through measurement based on the antenna structure configured by the first electronic device, to implement three-dimensional spatial positioning of the second electronic device.

To achieve the foregoing objectives, embodiments of this application provide the following technical solutions.

According to a first aspect, a first electronic device is provided, where the first electronic device includes at least three antennas, and the at least three antennas are fastened in the first electronic device; any two of the at least three antennas have a distance difference in a vertical direction and/or a horizontal direction, a distance between any two of the at least three antennas is less than or equal to a threshold, the at least three antennas are configured to send and receive UWB signals; the first electronic device is installed in a first direction; and the first electronic device is configured to receive a first UWB signal sent by a second electronic device, and measure a location of the second electronic device in a first coordinate system based on the first UWB signal, where the first coordinate system is determined based on a structural relationship between the at least three antennas.

Therefore, in the positioning method in this application, the first electronic device determines, based on an antenna structure configured by the first electronic device, the first coordinate system (which includes determining three axes and direction of the three axes), that is, a navigation coordinate system, and obtains coordinates of the second electronic device in the first coordinate system through measurement based on the antenna structure of the first electronic device. It can be learned that, according to the positioning method provided in this embodiment of this application, three-dimensional spatial positioning of the second electronic device based on one first electronic device is implemented.

In addition, it may be understood that, when a location of the first electronic device changes, the first electronic device may directly continue to measure the location of the second electronic device without re-determining the coordinate system. It can be learned that, in this application, positioning efficiency of the first electronic device is high, and mobility is good.

In a possible implementation, the threshold is a wavelength of the UWB signal received by the first electronic device.

In other words, differences between phases in which the UWB signal sent by the second electronic device arrives at different antennas in the first electronic device are greater than 0 and less than $2\pi$, which helps the first electronic device determine a direction of the second electronic device relative to the first electronic device.

In a possible implementation, that any two of the at least three antennas have a distance difference in a vertical direction and/or a horizontal direction includes: The at least three antennas are in an L-shaped structural relationship on a vertical plane or a horizontal plane; or the at least three antennas are in a triangular structural relationship on a vertical plane or a horizontal plane. Therefore, several specific structural relationships of antennas in the first electronic device are provided.

In a possible implementation, the at least three antennas include a first antenna, a second antenna, and a third antenna. That the at least three antennas are in an L-shaped structural relationship on a vertical plane or a horizontal plane includes: A connection line between the first antenna and the second antenna is perpendicular to a connection line between the first antenna and the third antenna; and both a distance between the first antenna and the second antenna and a distance between the first antenna and the third antenna are half of the wavelength of the UWB signal. That the at least three antennas are in a triangular structural relationship on a vertical plane or a horizontal plane includes: A distance between the first antenna and the second antenna, a distance between the first antenna and the third antenna, and a distance between the second antenna and the third antenna are all half of the wavelength of the UWB signal received by the first electronic device.

In a possible implementation, that the first coordinate system is determined based on a structural relationship between the at least three antennas includes: An origin of the first coordinate system is a location of the first antenna; an X axis of the first coordinate system is located on the connection line between the first antenna and the second antenna, and a positive direction of the X axis is a direction from the second antenna to the first antenna; a Y axis of the first coordinate system is a direction perpendicular to the X axis on the horizontal plane; and a Z axis of the first coordinate system is located on a vertical line, and a positive direction of the Z axis is opposite to a gravity direction.

In a possible implementation, the at least three antennas include a first antenna, a second antenna, a third antenna, and a fourth antenna, and that any two of the at least three antennas have a distance difference in a vertical direction and/or a horizontal direction includes: A connection line between the first antenna and the second antenna is parallel to the horizontal plane, and a connection line between the third antenna and the fourth antenna is perpendicular to the horizontal plane; and the connection line between the third antenna and the fourth antenna is perpendicular to the connection line between the third antenna and the fourth antenna on a same vertical plane; an origin of the first coordinate system is an intersection point of the connection line between the first antenna and the second antenna and the connection line between the third antenna and the fourth antenna; an X axis of the first coordinate system is located on the connection line between the first antenna and the second antenna, and a positive direction of the X axis is a direction from the second antenna to the first antenna; a Y axis of the first coordinate system is a direction perpendicular to the X axis on the horizontal plane; and a Z axis of the first coordinate system is located on the connection line between the third antenna and the fourth antenna, and a positive direction of the Z axis is opposite to a gravity direction. Therefore, a method for determining the first coordinate system when the first electronic device includes four antennas is provided.

In a possible implementation, a mark is disposed on a housing of the first electronic device, and a direction indicated by the mark is the first direction; and the first direction is the same as the positive direction of the Z axis in the first coordinate system or opposite to the gravity direction.

In other words, the first electronic device may be provided with a specific identifier (for example, an arrow or a text), used to prompt a user of a correct installation manner or a correct placement manner. In this way, a Z axis of a U system established by the first electronic device may be located on the vertical plane, to facilitate subsequent navigation based on navigation information of the U system.

In a possible implementation, that the first electronic device measures the location of the second electronic device in the first coordinate system based on the first UWB signal includes: The first electronic device measures a first distance between the second electronic device and the first electronic device and a first direction of the second electronic device relative to the first electronic device based on the first UWB signal; and the first electronic device determines the location of the second electronic device in the first coordinate system based on the first distance and the first direction.

In other words, in this application, the location of the second electronic device in the first coordinate system is determined based on the distance that is measured by the first electronic device and that is between the second electronic device and the first electronic device and the direction of the second electronic device relative to the first electronic device. However, in the conventional technology, three UWB base stations need to separately measure distances between the base stations and a second electronic device, and determine a location of the second electronic device based on the three distances. It can be learned that, in this application, the second electronic device only needs to request the first electronic device to measure the location of the second electronic device. Compared with the conventional technology in which the second electronic device needs to separately request three base stations to measure the location of the second electronic device, a quantity of requests sent by the second electronic device is reduced in this application.

In a possible implementation, that the first electronic device measures a first distance between the second electronic device and the first electronic device and a first direction of the second electronic device relative to the first electronic device based on the first UWB signal includes: The first electronic device measures the first distance between the second electronic device and the first electronic device by using a two-way ranging method; and the first electronic device determines the first direction based on a phase difference of a second UWB signal that is sent by the second electronic device and that is received by different antennas in the at least three antennas.

The second UWB signal is a UWB signal that is sent by the second electronic device and that is used to measure the first direction. In other words, the first electronic device may obtain the distance between the first electronic device and the second electronic device through measurement based on any one of the three antennas, and determine the direction of the second electronic device relative to the first electronic device based on the phase differences of the signal that is transmitted by the second electronic device and that is received by the three antennas.

In a possible implementation, that the first electronic device measure the first direction of the second electronic device relative to the first electronic device based on the first UWB signal further includes: The first electronic device determines the first direction based on a phase difference of a second UWB signal that is sent by the second electronic device and that is received by different antennas in the at least three antennas, a wavelength of the second UWB signal, and a distance between different antennas in the at least three antennas.

The second UWB signal is a UWB signal that is sent by the second electronic device and that is used to measure the first direction.

In a possible implementation, the first direction includes a first angle $\alpha$ and a second angle $\beta$, the first angle $\alpha$ is an included angle between a horizontal direction that is of the second UWB signal sent by the second electronic device and that is measured by the first electronic device and the X axis in the first coordinate system, and the second angle $\beta$ is an included angle between a vertical direction that is of the second UWB signal sent by the second electronic device and that is measured by the first electronic device and the Z axis in the first coordinate system.

In a possible implementation, when the at least three antennas in the first electronic device are in the L-shaped structural relationship, the first angle $\alpha = \arccos(\dfrac{\Delta\varphi_1 \times (\lambda/2\pi)}{L1})$; and a second angle $\beta = \arcsin(\dfrac{\Delta\varphi_2 \times (\lambda/2\pi)}{L2})$, where $\Delta\varphi_1 = \varphi_1 - \varphi_0$, $\varphi_0$ is a pahse of the second UWB signal measured by the first antenna, $\varphi_1$ is a phase of the second UWB signal measured by the second antenna, $\lambda$ is the wavelength of the second UWB signal, and L1 is a distance between the first antenna and the second antenna; and $\Delta\varphi_2 = \varphi_2 - \varphi_0$, $\varphi_2$ is a phase of the second UWB signal measured by the third antenna, and L2 is a distance between the first antenna and the third antenna.

In a possible implementation, that the first electronic device determines the location of the second electronic device in the first coordinate system based on the first distance and the first direction specifically includes:

$$\begin{cases} x = r\sin(\alpha) \\ y = r\cos(\alpha) \\ z = r\sin(\beta) \end{cases}$$

r is the distance that is between the second electronic device and the first electronic device and that is measured by the first electronic device, and (x, y, z) are coordinates of the second electronic device in the first coordinate system.

In a possible implementation, the first electronic device is further configured to: after the first electronic device measures the location of the second electronic device in the first coordinate system based on the first UWB signal, send the location of the second electronic device in the first coordinate system to the second electronic device.

According to a second aspect, an indoor positioning method is provided, applied to a system including a first electronic device and a second electronic device, where the first electronic device includes at least three antennas, and the at least three antennas are fastened in the first electronic device; any two of the at least three antennas have a distance difference in a vertical direction and/or a horizontal direction, and a distance between any two of the at least three antennas is less than or equal to a threshold; and the first electronic device is installed in a first direction. The method includes: The first electronic device receives a first UWB signal sent by the second electronic device; and the first electronic device measures a location of the second electronic device in a first coordinate system based on the first UWB signal, where the first coordinate system is determined based on a structural relationship between the at least three antennas.

In a possible implementation, that the first electronic device measures the location of the second electronic device in the first coordinate system based on the first UWB signal includes: The first electronic device measures a first distance between the second electronic device and the first electronic device and a first direction of the second electronic device relative to the first electronic device based on the first UWB signal; and the first electronic device determines the location of the second electronic device in the first coordinate system based on the first distance and the first direction.

In a possible implementation, that the first electronic device measures a first distance between the second electronic device and the first electronic device and a first direction of the second electronic device relative to the first electronic device based on the first UWB signal includes: The first electronic device measures the first distance between the second electronic device and the first electronic device by using a two-way ranging method; and the first electronic device determines the first direction based on a phase difference of a second UWB signal that is sent by the second electronic device and that is received by different antennas in the at least three antennas.

In a possible implementation, that the first electronic device measure the first direction of the second electronic device relative to the first electronic device based on the first UWB signal further includes: The first electronic device determines the first direction based on a phase difference of a second UWB signal that is sent by the second electronic device and that is received by different antennas in the at least three antennas, a wavelength of the second UWB signal, and a distance between different antennas in the at least three antennas.

In a possible implementation, after the first electronic device measures the location of the second electronic device in the first coordinate system based on the first UWB signal, the method further includes: The first electronic device sends the location of the second electronic device in the first coordinate system to the second electronic device.

According to a third aspect, an indoor positioning system is provided, including a first electronic device and a second electronic device, where the first electronic device includes at least three antennas, and the at least three antennas are fastened in the first electronic device; any two of the at least three antennas have a distance difference in a vertical direction and/or a horizontal direction, and a distance between any two of the at least three antennas is less than or equal to a threshold; and the first electronic device is installed in a first direction; the second electronic device is configured to send a first UWB signal to the first electronic device; and the first electronic device is configured to receive the first UWB signal, and measure a location of the second electronic device in a first coordinate system based on the first UWB signal, where the first coordinate system is determined based on a structural relationship between the at least three antennas.

According to a fourth aspect, a first electronic device is provided, including a processor, a memory, and a UWB module. The memory and the UWB module are coupled to the processor. The UWB module includes at least three antennas, and the at least three antennas are configured to send and receive UWB signals, where any two of the at least three antennas have a distance difference in a vertical direction and/or a horizontal direction, and a distance between any two of the at least three antennas is less than or equal to a threshold. The memory is configured to store computer program code, and the computer program code includes computer instructions. When the processor reads the computer instructions from the memory, the first electronic device is enabled to perform the indoor positioning method according to any one of the foregoing aspects and the possible implementations of the foregoing aspects.

According to a fifth aspect, a second electronic device is provided, including a processor, a memory, a UWB module, and an IMU module. The memory, the UWB module, and the IMU module are coupled to the processor. The UWB module includes at least one antenna, and the at least one antenna is configured to send and receive a UWB signal. The IMU module is configured to measure posture data of the second electronic device. The memory is configured to store computer program code, and the computer program code includes computer instructions. When the processor reads the computer instructions from the memory, the second electronic device is enabled to perform the indoor positioning method according to any one of the foregoing aspects and possible implementations of the foregoing aspects.

According to a sixth aspect, an apparatus is provided, where the apparatus is included in a first electronic device, and the apparatus has a function of implementing behavior of the first electronic device in any method in the foregoing aspects and the possible implementations of the foregoing aspects. The function may be implemented by hardware, or may be implemented by hardware executing corresponding software. The hardware or the software includes at least one module or unit corresponding to the foregoing function, for example, a receiving module or unit, a measurement module or unit, and a sending module or unit.

According to a seventh aspect, an apparatus is provided, where the apparatus is included in a second electronic device, and the apparatus has a function of implementing behavior of the second electronic device in any method in the foregoing aspects and the possible implementations of the foregoing aspects. The function may be implemented by hardware, or may be implemented by hardware executing corresponding software. The hardware or the software includes at least one module or unit corresponding to the foregoing function, for example, a receiving module or unit, a measurement module or unit, a sending module or unit, and a calculation unit.

According to an eighth aspect, a computer-readable storage medium is provided, including computer instructions. When the computer instructions are run on a first electronic device, the first electronic device is enabled to perform the method according to any one of the foregoing aspects and the possible implementations of the foregoing aspects.

According to a ninth aspect, a computer-readable storage medium is provided, including computer instructions. When the computer instructions are run on a second electronic device, the second electronic device is enabled to perform the method according to any one of the foregoing aspects and the possible implementations of the foregoing aspects.

According to a tenth aspect, a computer program product is provided. When the computer program product is run on a computer, the computer is enabled to perform the method according to any one of the foregoing aspects and the possible implementations of the foregoing aspects.

According to an eleventh aspect, a chip system is provided, including a processor. When the processor executes instructions, the processor performs the method according to any one of the foregoing aspects and the possible implementations of the foregoing aspects.

It may be understood that for beneficial effects that can be achieved by the method, the apparatus, the computer-readable storage medium, and the computer program product provided in the second aspect to the eleventh aspect, refer to the beneficial effects in any one of the first aspect and the possible implementations of the first aspect provided above. Details are not described herein again.

## BRIEF DESCRIPTION OF DRAWINGS

FIG. 1 is a schematic diagram of a method for establishing a coordinate system of a UWB system in the conventional technology;

FIG. 2 is a schematic diagram of a system architecture of a UWB system according to this application;

FIG. 3 is a schematic diagram of a structure of a first electronic device according to this application;

FIG. 4 is a schematic diagram of antenna architectures in some first electronic devices according to this application;

FIG. 5 is a schematic diagram of antenna architectures in some other first electronic devices according to this application;

FIG. 6A is a schematic diagram of antenna architectures in some still other first electronic devices according to this application;

FIG. 6B is a schematic diagram of antenna architectures in some yet other first electronic devices according to this application;

FIG. 7 is a schematic diagram of a structure of a second electronic device according to this application;

FIG. 8A is a schematic diagram of coordinate systems of some UWB systems according to this application;

FIG. 8B is a schematic diagram of coordinate systems of some other UWB systems according to this application;

FIG. 9 is a schematic diagram of a method for prompting an installation direction of some first electronic devices according to this application;

FIG. 10 is a schematic diagram of a two-way ranging method according to this application;

FIG. 11 is a schematic diagram of a method for calculating a direction of a second electronic device according to this application;

FIG. 12 is a schematic diagram of another method for calculating a direction of a second electronic device according to this application;

FIG. 13 is a schematic flowchart of a joint positioning method based on a UWB and an IMU according to this application;

FIG. 14 is a schematic diagram of a method for converting a U-system coordinate system to a b-system coordinate system according to this application;

FIG. 15 is a schematic diagram of an attitude angle according to this application; and

FIG. 16 is a schematic diagram of a system architecture of another UWB system according to this application.

## DESCRIPTION OF EMBODIMENTS

In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

In embodiments of this application, the term "example" or "for example" is used to represent giving an example, an illustration, or a description. Any embodiment or design scheme described as an "example" or "for example" in embodiments of this application should not be construed as being more preferred or having more advantages than another embodiment or design scheme. Exactly, use of the term such as "example" or "for example" is intended to present a related concept in a specific manner.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments of this application, unless otherwise specified, "a plurality of" means two or more than two.

The following describes in detail technical solutions provided in embodiments of this application with reference to the accompanying drawings.

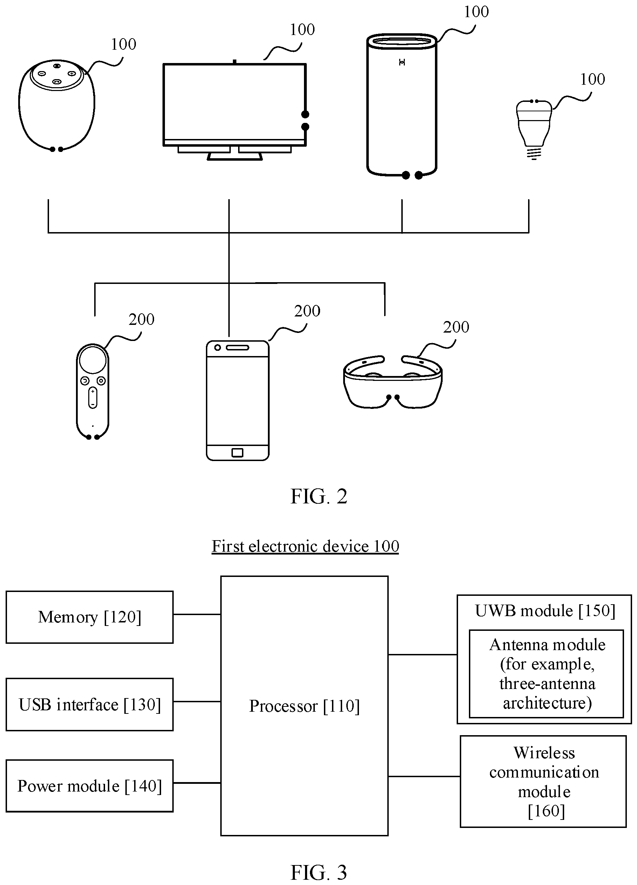

FIG. 2 is a schematic diagram of an architecture of a UWB system according to an embodiment of this application. This positioning system includes a first electronic device 100 and a second electronic device 200.

The first electronic device 100 has a UWB signal transceiver apparatus, and the UWB signal transceiver apparatus includes at least three antennas. The first electronic device 100 may establish a coordinate system (referred to as a U system for short) of the UWB system based on relative locations of antennas in the transceiver apparatus. Further, the first electronic device 100 may further use a two-way ranging method, and calculate a location of a device based on a difference between phases in which a received UWB signal sent by another device (for example, the second electronic device 200) arrives at different antennas.

For example, the first electronic device 100 may be specifically a UWB base station, a smart speaker, a smart television, an air purifier, a humidifier, a smart lamp (for example, a ceiling lamp, a desk lamp, and an aromatherapy lamp), a desktop computer, a router, a smart socket, a water dispenser, a refrigerator, a smart switch, a smart lock, a customer premise device (Customer Premise Equipment, CPE), a tablet computer, a mobile phone, and the like. A specific form of the first electronic device 100 is not limited in this application.

FIG. 3 is a schematic diagram of a structure of a first electronic device 100.

As shown in FIG. 3, the first electronic device 100 may include a processor 110, a memory 120, a universal serial bus (universal serial bus, USB) interface 130, a power module 140, a UWB module 150, and a wireless communication module 160.

It can be understood that the structure shown in this embodiment of the present invention does not constitute a specific limitation on the first electronic device 100. In some other embodiments of this application, the first electronic device 100 may include more or fewer components than those shown in the figure, or some components may be combined, or some components may be split, or different component arrangements may be used. The components shown in the figure may be implemented by using hardware, software, or a combination of software and hardware. In addition, an interface connection relationship between the modules that is shown in this embodiment of the present invention is only an example for description, and does not constitute a limitation on a structure of the first electronic device 100. In some other embodiments of this application, the first electronic device 100 may alternatively use an interface connection manner different from that shown in FIG. 3, or use a combination of a plurality of interface connection manners.

The processor 110 may include one or more processing units. Different processing units may be independent components, or may be integrated into one or more processors. For example, the processor 210 is a central processing unit (central processing unit, CPU), or an application-specific integrated circuit (application specific integrated circuit, ASIC), or is configured as one or more integrated circuits for implementing embodiments of this application, for example, one or more microprocessors (digital signal processor, DSP) or one or more field programmable gate arrays (field programmable gate array, FPGA).

The memory 120 may be configured to store computer-executable program code. The executable program code includes instructions. For example, the memory 120 may further store data processed by the processor 110, for example, a location and a posture of a second electronic device 200 that are obtained through calculation. In addition, the memory 120 may include a highspeed random access memory, and may further include a non-volatile memory, for example, at least one magnetic disk storage device, a flash memory device, or a universal flash storage (universal flash storage, UFS). The processor 110 performs various function applications of the first electronic device 100 and data processing by running the instructions stored in the memory 120 and/or instructions stored in the memory disposed in the processor.

The USB interface 130 is an interface that conforms to a USB standard specification, and may be specifically a mini USB interface, a micro USB interface, a USB Type-C interface, or the like. The USB interface 130 may be configured to connect to a charger to charge the first electronic device 100, or may be configured to transmit data between the first electronic device 100 and a peripheral device.

The power module 140 is configured to supply power to each component of the first electronic device 100, for example, the processor 210 and the memory 220.

The UWB module 150 may provide a wireless communication solution that is based on a UWB technology and that is applied to the first electronic device 100. The UWB technology is different from a conventional communication technology, and the UWB technology implements wireless transmission by sending and receiving extremely narrow pulses having a nanosecond or microsecond level or less. Because a pulse time width is extremely short, ultra-bandwidth on a spectrum can be achieved, for example, a bandwidth used is more than 500 MHz. In addition to wireless communication, the UWB technology can also implement positioning. Specifically, a flight time of a signal in the air may be calculated by detecting a signal pulse location and combining some positioning algorithms. A distance between the second electronic device 200 and the first electronic device 100 is obtained by multiplying the time by a transmission rate (for example, the speed of light) of the signal in the air. In addition, in this application, the first electronic device 100 may further determine a direction of the second electronic device 200 relative to the first electronic device 100 based on a difference between phases in which the UWB signal sent by the second electronic device 200 arrives at different antennas. Thus, a goal of positioning function is achieved, and the precision can reach a centimeter level.

In this application, the UWB module 150 includes an antenna module. The antenna module includes at least three antennas, configured to send and receive UWB signals. The first electronic device 100 establishes the coordinate system of the UWB system based on a location relationship of the antennas in the antenna module. Generally, when the first electronic device 100 is used for positioning, the first electronic device 100 may be installed on an indoor wall or a cabinet, or placed on a floor or a desktop. In this application, the coordinate system of the UWB system is determined by using distance differences of the three antennas in the antenna module formed in a horizontal direction and a vertical direction.

In some embodiments, when the first electronic device 100 is in a posture when the positioning function is used, the antennas in the UWB module 150 may have an L-shaped (or referred to as right-angled triangular) structural relationship.

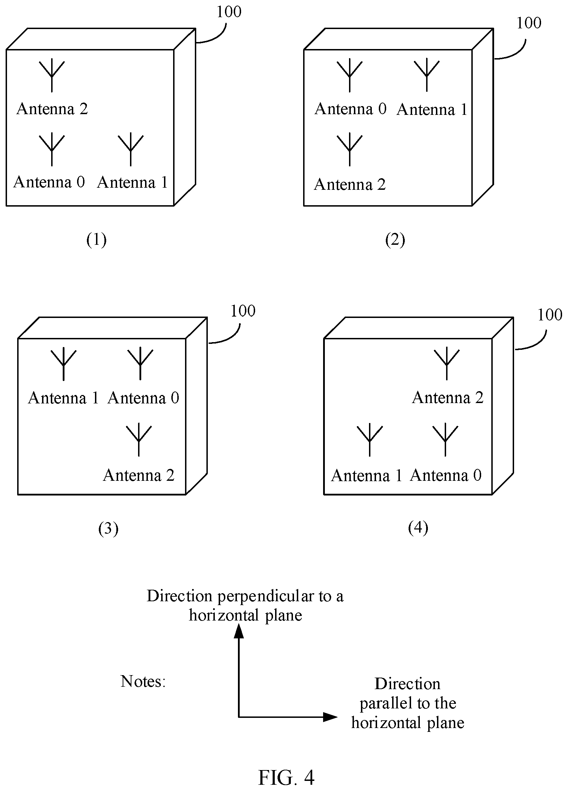

For example, as shown in (1) in FIG. 4, (2) in FIG. 4, (3) in FIG. 4, and (4) in FIG. 4, an antenna 0 and an antenna 1 in the UWB module 150 are aligned in a horizontal direction, and the antenna 0 and an antenna 2 are aligned in a vertical direction. That is, the antenna 0, the antenna 1, and the antenna 2 have an L-shaped structural relationship on a vertical plane. In some specific examples, when the first electronic device 100 is a smart television, a desktop computer, a tablet computer, a smart socket, a smart switch, a smart lock, a CPE, or the like, an architecture in which three antennas are L-shaped on a vertical plane may be used, so that space occupied in a horizontal direction of the first electronic device 100 is small.

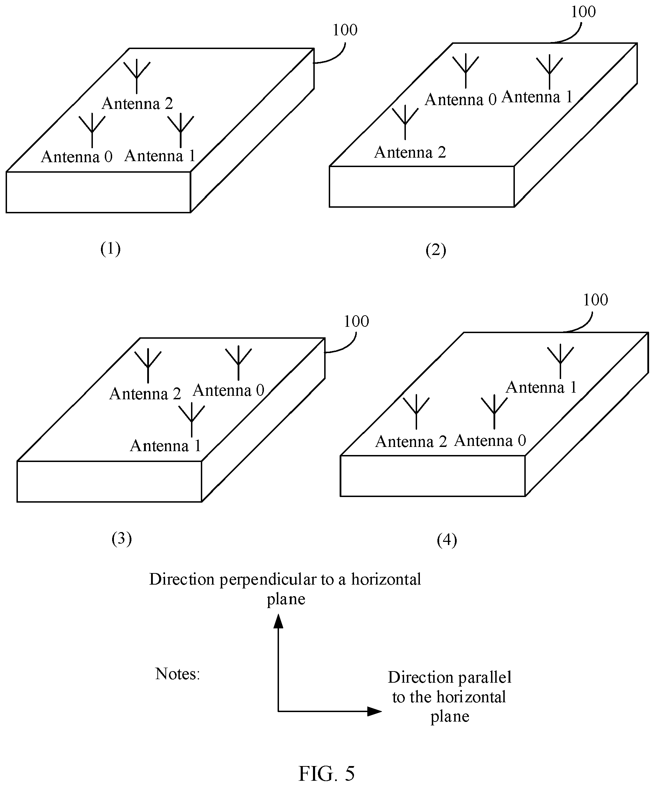

For another example, as shown in (1) in FIG. 5, (2) in FIG. 5, (3) in FIG. 5, and (4) in FIG. 5, the antenna 0, the antenna 1, and the antenna 2 in the UWB module 150 are located on a same horizontal plane, and a connection line between the antenna 0 and the antenna 1 is perpendicular to a connection line between the antenna 0 and the antenna 2. That is, the antenna 0, the antenna 1, and the antenna 2 may also have an L-shaped structural relationship on a horizontal plane. In some other specific examples, when the first electronic device 100 is a smart speaker, an air purifier, a water dispenser, a refrigerator, or the like, an architecture in which three antennas are L-shaped on a horizontal plane may be used, so that space occupied in a vertical direction of the first electronic device 100 is small.

For example, when the antennas (including the antenna 0, the antenna 1, and the antenna 2) in the UWB module 150 have an L-shaped structural relationship, a distance between the antenna 0 and the antenna 1 and a distance between the antenna 0 and the antenna 2 may be less than or equal to $\lambda$, for example, $1/2\lambda$, where $\lambda$ is a wavelength of a signal to be received by the first electronic device 100 (for example, a UWB signal sent by the second electronic device 200). In addition, the distance between the antenna 0 and the antenna 1 and the distance between the antenna 0 and the antenna 2 may be the same or different.

In some other embodiments, when the first electronic device 100 is in a posture of using the positioning function, the antennas in the UWB module 150 may have a triangular (or referred to as an equilateral triangular or isosceles triangular) structural relationship.

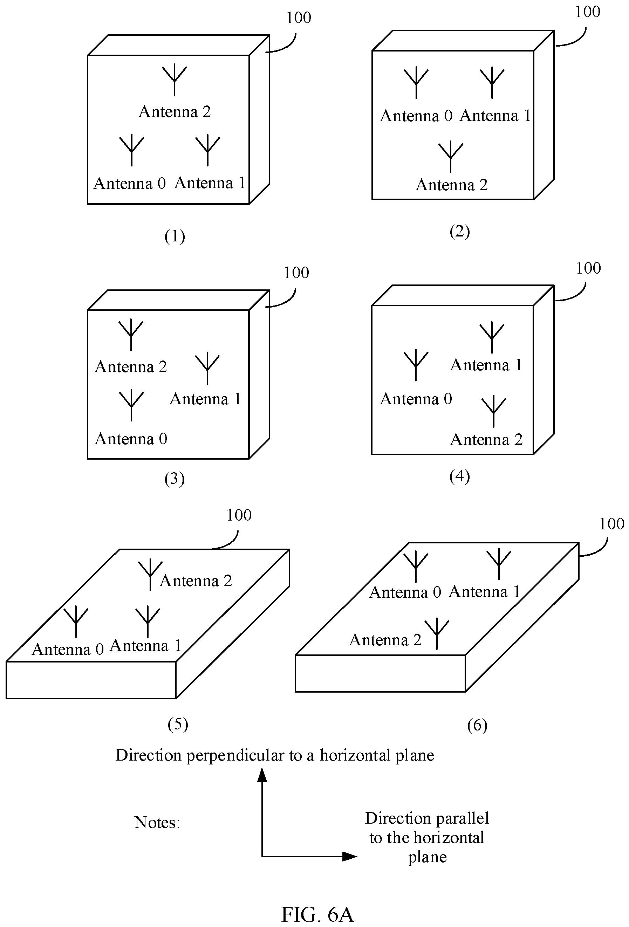

For example, as shown in (1) in FIG. 6A, (2) in FIG. 6A, (3) in FIG. 6A, and (4) in FIG. 6A, the antenna 0, the antenna 1, and the antenna 2 in the UWB module 150 have a triangular structural relationship on a vertical plane. In some specific examples, when the first electronic device 100 is a smart television, a desktop computer, a tablet computer, a smart socket, a smart switch, a smart lock, a CPE, or the like, an architecture in which three antennas are L-shaped on a vertical plane may be used, so that space occupied in a horizontal direction of the first electronic device 100 is small.

For another example, as shown in (5) in FIG. 6A and (6) in FIG. 6A, the antenna 0, the antenna 1, and the antenna 2 in the UWB module 150 may have a triangular structural relationship on a horizontal plane. In some other specific examples, when the first electronic device 100 is a smart speaker, an air purifier, a water dispenser, a refrigerator, or the like, an architecture in which three antennas are L-shaped on a horizontal plane may be used, so that space occupied in a vertical direction of the first electronic device 100 is small.

For example, when the antennas (including the antenna 0, the antenna 1, and the antenna 2) in the UWB module 150 have a triangular structural relationship, a distance between any two of the three antennas may be less than or equal to $\lambda$, for example, $1/2k$, where $\lambda$ is a wavelength of a target signal received by the first electronic device 100 (for example, a UWB signal sent by the second electronic device 200). For example, the distance between the antenna 0 and the antenna 1 may be less than or equal to $1/2k$, and the distance between antenna 0 and antenna 2 is less than or equal to $1/2\lambda$. In addition, any two of the three antennas may have a same or different distance.

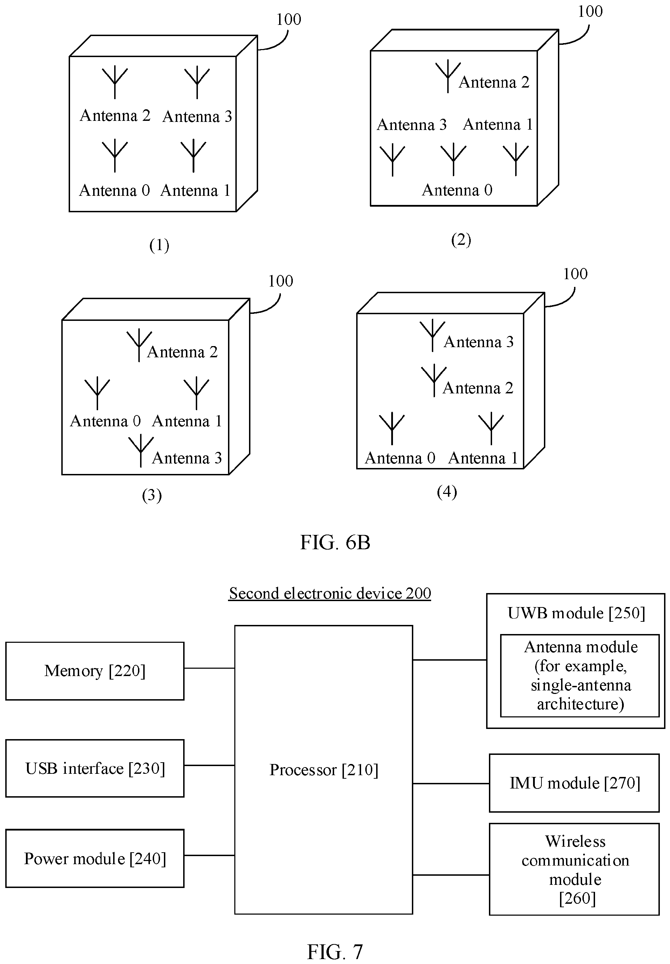

FIG. 4, FIG. 5, and FIG. 6A are described by using an example in which the UWB module 150 includes three antennas. It may be understood that the UWB module 150 may further include more than three antennas. For example, as shown in (1) in FIG. 6B, the UWB module 150 includes an antenna 0 to an antenna 3, and the four antennas form a rectangular structure. Any three antennas form the L-shaped structure described above. For another example, as shown in (2) in FIG. 6B, the UWB module 150 includes an antenna 0 to an antenna 3, and the four antennas are shown in the figure. The antenna 0, the antenna 1, and the antenna 2 form the L-shaped structure described above. Alternatively, the antenna 1, the antenna 2, and the antenna 3 form the triangular structure described above. For another example, as shown in (3) in FIG. 6B, the UWB module 150 includes an antenna 0 to an antenna 3, and the four antennas form a rhombic structure. The antenna 0, the antenna 1, and the antenna 2 form the triangular structure described above. Alternatively, the antenna 0, the antenna 1, and the antenna 3 form the triangular structure described above. For another example, as shown in (4) in FIG. 6B, the UWB module 150 includes an antenna 0 to an antenna 3, and the four antennas form a rhombic structure. The antenna 0, the antenna 1, and the antenna 2 form the triangular structure described above. In conclusion, a specific quantity of antennas of the UWB module 150 is not limited in embodiments of this application.

Optionally, the first electronic device 100 may further include the wireless communication module 160, to provide a wireless communication solution that is applied to the first electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through an antenna, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna.

The second electronic device 200 has a UWB signal transceiver apparatus, and the UWB signal transceiver apparatus may be configured to send a UWB signal, so that the first electronic device 100 calculates a location of the second electronic device 200.

For example, the second electronic device 200 may be specifically a UWB tag, a mobile phone, a remote control, a wearable electronic device (a smart watch, a smart band, VR glasses, or the like), a tablet computer, a personal digital assistant (personal digital assistant, PDA), a handle, an air mouse, or the like. A specific form of the second electronic device 200 is not limited in this application.

FIG. 7 is a schematic diagram of a structure of a second electronic device 200.

As shown in FIG. 7, the second electronic device 200 may include a processor 210, a memory 220, a universal serial bus (universal serial bus, USB) interface 230, a power module 240, a UWB module 250, and a wireless communication module 260. Optionally, the second electronic device 200 may further include an IMU module 270.

It can be understood that the structure shown in this embodiment of the present invention does not constitute a specific limitation on the second electronic device 200. In some other embodiments of this application, the second electronic device 200 may include more or fewer components than those shown in the figure, or some components may be combined, or some components may be split, or different component arrangements may be used. The components shown in the figure may be implemented by using hardware, software, or a combination of software and hardware. In addition, an interface connection relationship between the modules that is shown in this embodiment of the present invention is only an example for description, and does not constitute a limitation on the structure of the second electronic device 200. In some other embodiments of this application, the second electronic device 200 may alternatively use an interface connection manner different from that shown in FIG. 7, or use a combination of a plurality of interface connection manners.

The UWB module 250 may provide a wireless communication solution that is based on a UWB technology and that is applied to the second electronic device 200. The UWB module 250 includes an antenna module. The antenna module may include an antenna, configured to send and receive a UWB signal, to determine a distance between the second electronic device 200 and the first electronic device 100 and a direction of the second electronic device 200 relative to the first electronic device 100.

In some examples, the second electronic device 200 may further include an inertial measurement unit (inertial measurement unit, IMU) module 270. The IMU module 270 may include a combination unit including three accelerometers and three gyroscopes, and the accelerometers and the gyroscopes are installed on measurement axes perpendicular to each other. The accelerometer may detect an acceleration of the second electronic device 200 on three axes in a carrier coordinate system (a b system for short), and an angular velocity of the b system around three axes in a geographical coordinate system (a t system for short). Then, a posture of the second electronic device 200 may be resolved based on the angular velocity and the acceleration that are measured by the second electronic device 200. Further, a moving track of the second electronic device 200 may be calculated based on a posture change of the second electronic device 200. Then, more accurate and continuous positioning and navigation may be provided for the second electronic device 200 with reference to locations of the second electronic device 200 at some moments that are measured by the first electronic device 100.

In addition, for descriptions of components such as the processor 210, the memory 220, the USB interface 230, the power module 240, and the wireless communication module 260 in the second electronic device 200, refer to descriptions of related components in the first electronic device 100 in FIG. 3. Details are not described herein again.

It should be further noted that, in addition to the first electronic device 100 having the foregoing specific antenna architecture (for example, a three-antenna architecture), the UWB system shown in FIG. 2 may further include a third electronic device 300 having another antenna architecture, for example, a UWB base station including a single-antenna architecture. The following is described with reference to a specific embodiment.

The following describes in detail the indoor positioning method provided in embodiments of this application with reference to the accompanying drawings and specific embodiments.

1. A first electronic device 100 establishes a coordinate system of a UWB system (that is, establishes a U system).

Because a plurality of antennas in the first electronic device 100 have a distance difference in a horizontal direction and/or a vertical direction, the coordinate system of the UWB system may be established by using the distance difference between the antennas.

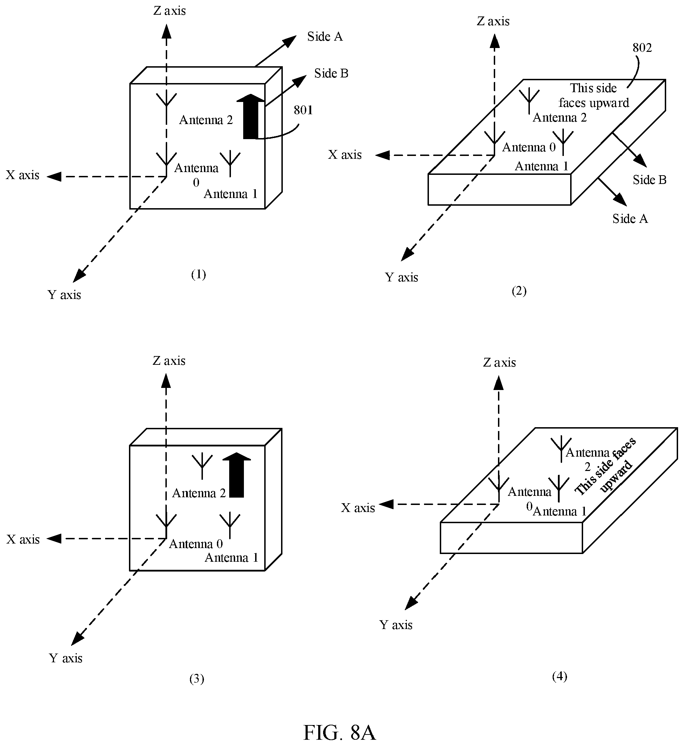

For example, as shown in (1) in FIG. 8A, when three antennas in the first electronic device 100 are in an L-shaped structural relationship on a vertical plane, a location of an antenna 0 may be used as an origin of the U system, a connection line between the antenna 0 and an antenna 1 may be used as an X axis of the U system, and a direction from the antenna 1 to the antenna 0 is a positive direction of the X axis. A connection line between the antenna 0 and an antenna 2 is a Z axis of the U system, and a direction from the antenna 0 to the antenna 2 is a positive direction of the Z axis. A Y axis of the U system is perpendicular to a plane on which the three antennas are located, and a positive direction of the Y axis of the U system is determined combined with a right hand rule.

It should be noted herein that, in some examples, when a user installs the first electronic device 100, a specific identifier (for example, an arrow or a text) may be displayed on a housing of the first electronic device 100, to prompt the user of a correct installation manner or a correct placement manner. In this way, the Z axis of the U system established by the first electronic device 100 can be located on the vertical plane, so that the user can subsequently perform navigation based on navigation information of the U system. As shown in (1) in FIG. 8A, an arrow 801 is displayed on the housing of the first electronic device 100, and is used to indicate that a direction of the arrow 801 is kept opposite to a gravity direction when the user vertically installs or places the first electronic device 100. For example, as shown in (1) in FIG. 8A, the first electronic device 100 displays a mark of a side A (or a side B), to prompt the user that the side A of the electronic device is installed close to a wall. In this case, the positive direction of the Y axis is perpendicular to a wall surface and points to an outside direction of the wall, that is, a direction from the side A to the side B, and the positive direction of the Z axis is opposite to the gravity direction.

Certainly, naming of the three axes in the U system and positive directions of the three axes may alternatively be defined in another way. For example, the connection line between the antenna 0 and the antenna 1 is a Y axis of the U system, and the direction from the antenna 0 to the antenna 1 is a positive direction of the Y axis. The connection line between the antenna 0 and the antenna 2 is used as a Z axis of the U system, and a direction from the antenna 0 to the antenna 2 is a positive direction of the Z axis. Then, a direction of an X axis of the U system is determined combined with the right hand rule. In some examples, for ease of subsequent calculation, the Z axis of the U system may be set on the vertical plane, and the positive direction of the Z axis is opposite to the gravity direction.

It can be learned that a clear coordinate system may be established based on relative locations of the three antennas in the first electronic device 100 and the right hand rule, that is, three axes of the coordinate system and positive directions of the three axes are determined.

For another example, as shown in (2) in FIG. 8A, when three antennas in the first electronic device 100 are in an L-shaped structural relationship on a horizontal plane, a location of an antenna 0 may be used as an origin of the U system, a connection line between the antenna 0 and an antenna 1 may be used as an X axis of the U system, and a direction from the antenna 1 to the antenna 0 is a positive direction of the X axis. A connection line between the antenna 0 and an antenna 2 is a Y axis of the U system, and a direction from the antenna 2 to the antenna 0 is a positive direction of the Y axis. A Z axis of the U system is perpendicular to the plane on which the three antennas are located, and a positive direction of the Z axis of the U system is determined combined with a right hand rule.

In some examples, when a user installs the first electronic device 100, a specific identifier (for example, an arrow or a text) may be displayed on a housing of the first electronic device 100, to prompt the user of a correct installation manner or a correct placement manner. In this way, the Z axis of the U system established by the first electronic device 100 can be located on the vertical plane, so that the user can subsequently perform navigation based on navigation information of the U system. As shown in (2) in FIG. 8A, a side B of the housing of the first electronic device 100 displays a text 802 indicating "this side faces upward", which is used to prompt the user to horizontally install or place the first electronic device 100, and keep the side with the text indicating "this side faces upward" horizontal and upward. For example, as shown in (2) in FIG. 8A, a side A of the first electronic device 100 is placed close to the ground. In this case, a positive direction of the Z axis is perpendicular to the ground and points to the air, that is, a direction from the side A to the side B. For another example, the side A of the housing of the first electronic device 100 displays a text indicating "this side faces downward", which is used to prompt the user to horizontally install or place the first electronic device 100, and keep the side with the text indicating "this side faces downward" horizontal and downward. In this case, the positive direction of the Z axis is still perpendicular to the ground and points to the air, that is, the direction from the side A to the side B.

Certainly, naming of the three axes in the U system and positive directions of the three axes may also be defined in another way, and details are not described herein again.

For still another example, as shown in (3) in FIG. 8A, when three antennas in the first electronic device 100 are in a triangular structural relationship on a horizontal plane, a location of an antenna 0 may be used as an origin of the U system, a connection line between the antenna 0 and an antenna 1 may be used as an X axis of the U system, and a direction from the antenna 1 to the antenna 0 is a positive direction of the X axis. In the plane on which the three antennas are located, a line perpendicular to the X axis is used as a Z axis of the U system, and an antenna 2 is located in a positive direction of the Z axis. Then, a direction of a Y axis of the U system is determined combined with the right hand rule. In some examples, an arrow is displayed on the housing of the first electronic device 100, and is used to prompt a user to vertically install or place the first electronic device 100, and a direction of an arrow 801 is opposite to a gravity direction. For a specific installation manner, refer to the installation manner in (1) in FIG. 8A, so that a positive direction of the Z axis is opposite to the gravity direction.

Certainly, naming of the three axes in the U system and positive directions of the three axes may also be defined in another way, and details are not described herein again.

For yet another example, as shown in (4) in FIG. 8A, when three antennas in the first electronic device 100 are in a triangular structural relationship on a vertical plane, a location of an antenna 0 may be used as an origin of the U system, a connection line between the antenna 0 and an antenna 1 may be used as an X axis of the U system, and a direction from the antenna 1 to the antenna 0 is a positive direction of the X axis. In the plane on which the three antennas are located, a line perpendicular to the X axis is used as a Y axis of the U system, and an antenna 2 is located in a negative direction of the Y axis. Then, a direction of a Z axis of the U system is determined combined with the right hand rule. In some examples, a text is displayed on the housing of the first electronic device 100, and is used to prompt the user to correctly install or place the first electronic device 100, so that the Z axis of the U system established by the first electronic device 100 is located on a vertical plane, and the user subsequently performs navigation based on navigation information of the U system. For a specific installation manner, refer to the installation manner in (2) in FIG. 8A, so that a positive direction of the Z axis is opposite to the gravity direction.

Certainly, naming of the three axes in the U system and positive directions of the three axes may also be defined in another way, and details are not described herein again.

In conclusion, it can be learned that a clear coordinate system may be established based on relative locations of the three antennas in the first electronic device 100 and the right hand rule, that is, three axes of the U system and positive directions of the three axes are determined.

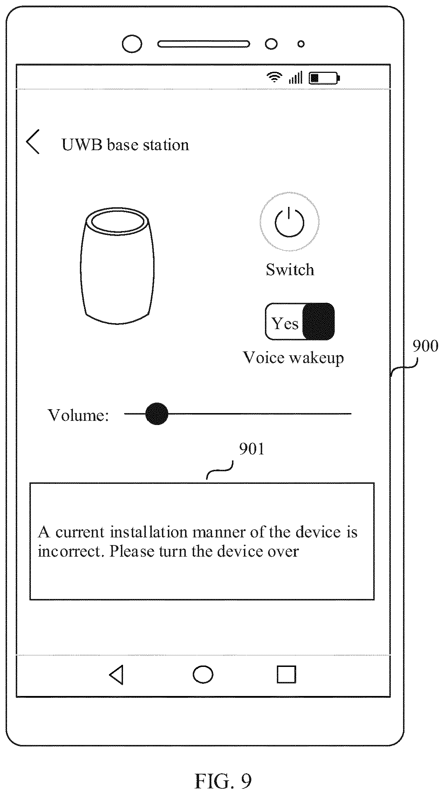

In some other examples, when the user installs the first electronic device 100, if the first electronic device 100 has a screen, the screen may also display corresponding prompt information, to prompt the user of a correct installation manner or a correct placement manner. For example, a positive direction of fonts on the screen represents a correct installation manner or placement manner of the device. Alternatively, the user may view, by using a control device (for example, on a smart home app that controls the device) of the first electronic device 100, a correct installation manner or a correct placement manner of the first electronic device 100. For example, a mobile phone is the control device of the first electronic device 100, and may run a smart home APP, for example, display an interface 900 shown in FIG. 9. In the interface 900, a prompt text or an animation 901 may be displayed, and prompts "A current installation manner of the device is incorrect. Please turn the device over". Certainly, another manner such as voice may be used to prompt the user of a correct installation manner. This is not limited in this embodiment of this application.

In the foregoing embodiment, a method for establishing a U system is described by using an example in which the first electronic device 100 includes three antennas. When the first electronic device 100 includes more antennas, three antennas having the foregoing L-shaped structure or triangular structure may also be used to establish a U system.

A specific establishment method is the same as that described above. In other examples, more antennas may also be combined to establish a U system.

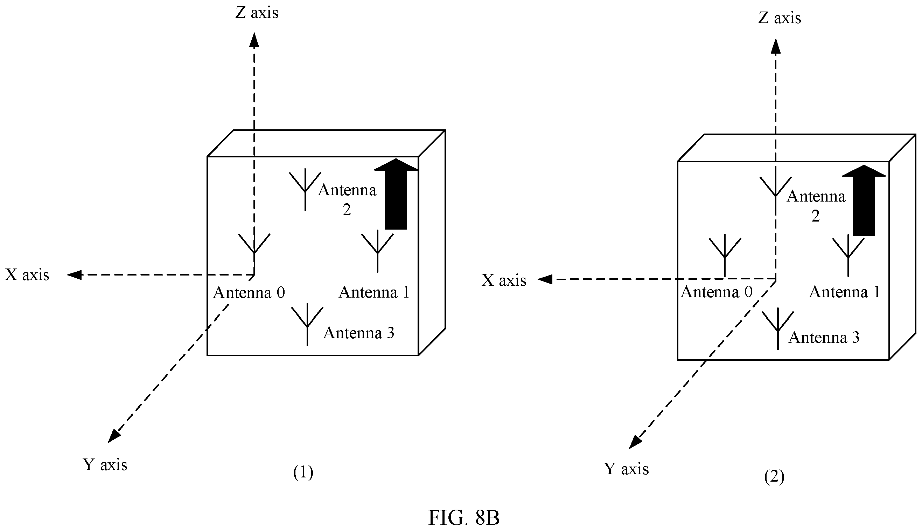

For example, as shown in (1) in FIG. 8B, the first electronic device 100 includes four antennas: an antenna 0 to an antenna 3. A U system shown in (1) in FIG. 8B may be established by using the foregoing establishment method based on a triangular structure formed by the antenna 0 to the antenna 2. An origin of the U system is located at a location of the antenna 0. Alternatively, as shown in (2) in FIG. 8B, an intersection point of a connection line between an antenna 0 and an antenna 1 and a connection line between an antenna 2 and an antenna 3 is determined as an origin of a U system. A direction from the antenna 1 to the antenna 0 is a positive direction of an X axis, a location from the origin to the antenna 2 is a positive direction of a Z axis, and a direction perpendicular to a plane on which the X axis and the Y axis are located is a direction of a Y axis. In other words, variations of the method for establishing a U system based on embodiments of this application should also fall within the protection scope of this application.

2. The first electronic device 100 measures a distance and an orientation of the second electronic device 200.

Specifically, the first electronic device 100 may obtain a distance between the first electronic device 100 and the second electronic device 200 through measurement based on any one of three antennas, and determine a direction of the second electronic device 200 relative to the first electronic device 100 based on phase differences of a signal that is transmitted by the second electronic device 200 and that is received by the three antennas.

(1) Measure the distance to the second electronic device 200.

For example, the first electronic device 100 may measure the distance between the first electronic device 100 and the second electronic device 200 by using a two-way ranging method, and the distance is marked, for example, as r. The two-way ranging method includes single-sided two-way ranging (Single-sided Two-way Ranging, SS-TWR) and double-sided two-way ranging (Double-sided Two-way Ranging, DS-TWR). The following uses DS-TWR as an example to briefly describe the ranging method.

In the DS-TWR method, two timestamps of a round trip between the first electronic devices 100 and the second electronic device 200 are recorded, and finally a time of flight is obtained. Although the DS-TWR method increases a response time, the DS-TWR method reduces ranging error. The double-sided two-way ranging is classified into a four-message mode and a three-message mode based on a number of sent messages.

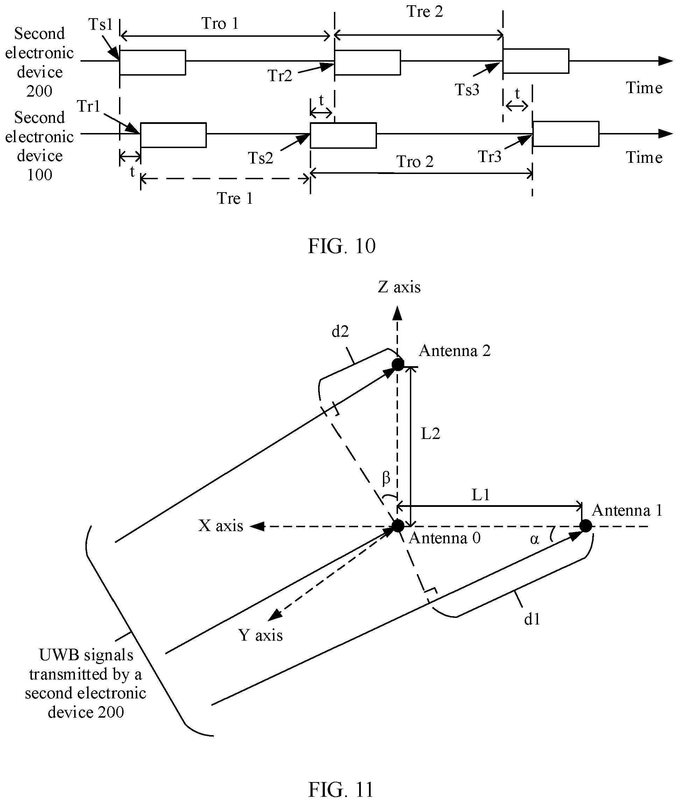

The 3-message mode is used as an example. As shown in FIG. 10, the second electronic device 200 sends a ranging request packet (that is, a first packet), and records a sending time Ts1. After receiving the request packet, the first electronic device 100 records a receiving time Tr1. A time difference t between Tr1 and Ts1 is a transmission time of the packet between the two devices. It takes Tre1 for the first electronic device 100 to process the request packet. Then, the first electronic device 100 sends a response packet (that is, a second packet), and records a sending time Ts2. After receiving the response packet, the second electronic device 200 records a receiving time Tr2. A time difference between Tr2 and Ts2 is t. A time difference between a time when the second electronic device 200 sends the first packet and a time when the second electronic device 200 receives the second packet is Tro1. It takes Tre2 for the second electronic device 200 to process the response packet. The second electronic device 200 sends a last packet (that is, a third packet), and records a sending time Ts3. After receiving the third packet, the first electronic device 100 records a receiving time Tr3. A time difference between Tr3 and Ts3 is t. In addition, a time difference between a time when the first electronic device 100 starts to send the second packet and a time when the first electronic device 100 receives the third packet is Tro2. Therefore, the following Formula (1) may be used to calculate the transmission time t of the packet between the two devices. Formula (1) is as follows:

$$t = \frac{Tro1 \times Tro2 - Tre1 \times Tre2}{Tro1 + Tro2 + Tre1 + Tre2} \qquad \text{Formula (1)}$$

Then, the distance between the two devices is $r = c \times t$. c is the speed of light.

(2) Measure the direction of the second electronic device 200.

The direction of the second electronic device 200 may be understood as a direction in which the first electronic device 100 measures a signal transmitted by the second electronic device 200. In this application, two angles $\alpha$ and $\beta$ may indicate the direction of the signal transmitted by the second electronic device 200. $\alpha$ is an included angle between a horizontal direction of a UWB signal that is measured by the first electronic device 100 and that is transmitted by the second electronic device 200 and a positive axis of an X axis, and generally $\alpha \in [0, \pi]$. The horizontal direction of the signal may be understood as a component, on a horizontal plane (for example, a plane where the X axis and a Y axis of a U system are located), of a vector from the second electronic device 200 to the first electronic device 100. $\beta$ is an included angle between a vertical direction of the UWB signal that is measured by the first electronic device 100 and that is transmitted by the second electronic device 200 and a positive axis of a Z axis, and generally $\beta \in [0, \pi]$. The

vertical direction of the signal may be understood as a component, on a vertical plane (for example, a plane where the X axis and the Z axis of the U system are located), of a vector from the second electronic device 200 to the first electronic device 100.

For example, as shown in FIG. 11, the first electronic device 100 uses an L-shaped three-antenna architecture. When the second electronic device 200 reaches an antenna 1, an included angle between the horizontal direction and the positive axis of the X axis is α. When the second electronic device 200 reaches an antenna 2, an included angle between the horizontal direction and the positive axis of the Z axis is β.

Generally, a distance between the second electronic device 200 and the first electronic device 100 is far greater than a distance between three antennas in the first electronic device 100. Therefore, it may be considered that signals from the second electronic device 200 to the three antennas are parallel. Then, it can be learned from optical knowledge that an optical path difference between a signal arriving at the antenna 0 and a signal arriving at the antenna 1 $d1=\Delta\varphi_1\times(\lambda/2\pi)$. The phase difference $\Delta\varphi_1=\varphi_1-\varphi_0$. $\varphi_0$ is a phase of the signal that is sent by the second electronic device 200 and that is measured by the antenna 0, $\varphi_1$ is a phase of the signal that is sent by the second electronic device 200 and that is measured by the antenna 1, and $\Delta\varphi_1 \in [-\pi,\pi]$. $\lambda$ is a wavelength of the signal sent by the second electronic device 200. Because the antenna 0, the antenna 1, and the antenna 2 are fastened in the first electronic device 100, and a distance L1 between the antenna 0 and the antenna 1 is a known preset value, the angle α may be calculated by using Formula (2). Formula (2) is as follows:

$$\alpha = \arccos(d1/L1) = \arccos(\frac{\Delta\varphi_1\times(\lambda/2\pi)}{L1}) \quad \text{Formula (2)}$$

Similarly, an optical path difference $d2=\Delta\varphi_2\times(\lambda/2\pi)$ between the signal arriving at antenna 0 and a signal arriving at antenna 2. The phase difference $\Delta\varphi_2=\varphi_2-\varphi_0$. $\varphi_2$ is a phase of a signal that is sent by the second electronic device 200 and that is measured by the antenna 2, and $\Delta\varphi_2 \in [-\pi,\pi]$. In addition, because a distance L2 (where L2 and L1 may be equal or unequal) between the antenna 0 and the antenna 1 is known, the angle β can be calculated using Formula (3). Formula (3) is as follows:

$$\beta = \arcsin(d2/L2) = \arcsin(\frac{\Delta\varphi_2\times(\lambda/2\pi)}{L2}) \quad \text{Formula (3)}$$

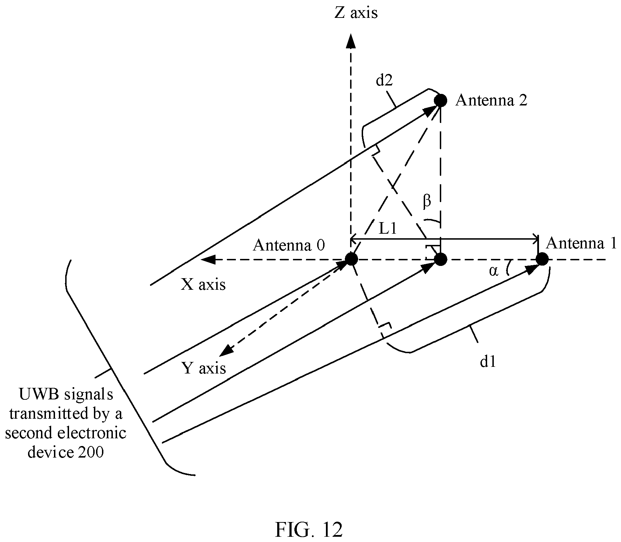

For another example, as shown in FIG. 12, the first electronic device 100 uses a triangular (for example, an equilateral triangular) three-antenna architecture. When the second electronic device 200 reaches an antenna 1, an included angle between the horizontal direction and the positive axis of the X axis is α. When the second electronic device 200 reaches an antenna 2, an included angle between the horizontal direction and the positive axis of the Z axis is β.

A calculation method of α is the same as that of an L-shaped antenna architecture, that is, Formula (2) is used.

When β is calculated, a difference between a phase ($\varphi_0 +\Delta\varphi_1 / 2$) of the signal arriving at a middle point of antenna 1 and antenna 0 and a phase ($\varphi_2$) of the signal arriving at antenna 2 is first calculated, that is, $\varphi_2-(\varphi_0+\Delta\varphi_1/2)=\varphi_2-\varphi_0-\Delta\varphi_1/2=\Delta\varphi_2-\Delta\varphi_1/2$.

Then, an optical path difference d2 between the signal arriving at the middle of the antenna 1 and the antenna 0 and the signal arriving at the antenna 2 is calculated by using Formula (4), and then β is obtained by using Formula (5). Formula (4) and Formula (5) are as follows:

$$d2 = (\Delta\varphi_2 -\Delta\varphi_1 / 2)\times(\lambda/2\pi) \quad \text{Formula (4)}$$

$$\beta = \arcsin(d2/L2) = \arcsin(\frac{(\Delta\varphi_2 -\Delta\varphi_1 / 2)\times(\lambda/2\pi)}{L2}) \quad \text{Formula (5)}$$

(3) Calculate coordinates of the second electronic device 200

After α and β are obtained through calculation, further, based on the distance r between the second electronic device 200 and the first electronic device 100, α, and β, the coordinates (x, y, z) of the second electronic device 200 in the UWB system may be calculated by using Formula (6). Formula (6) is as follows:

$$\begin{cases} x = r\sin(\alpha) \\ y = r\cos(\alpha) \\ z = r\sin(\beta) \end{cases} \quad \text{Formula (6)}$$

It can be learned that the first electronic device 100 may record the coordinates of the second electronic device 200 in real time, to obtain a route change of the second electronic device 200, and provide navigation information for the second electronic device 200.

In some examples, after obtaining the coordinate information of the second electronic device 200 through calculation, the first electronic device 100 may provide a corresponding service based on the obtained location of the second electronic device 200. For example, the first electronic device 100 provides navigation information for the second electronic device 200 based on a location change of the second electronic device 200. Specifically, the first electronic device 100 may send the navigation information to the second electronic device 200 in a UWB connection manner (that is, by using the UWB module 150). Optionally, the first electronic device 100 may further send location information of the second electronic device 200. Certainly, the first electronic device 100 may also send the navigation information and the location information to the second electronic device 200 in another connection manner (for example, by using the wireless communication module 160, or the UWB interface 130). For another example, when determining that the second electronic device 200 is in a preset position, the first electronic device 100 provides a preset service for the second electronic device 200. In conclusion, application after the first electronic device 100 obtains the coordinates of the second electronic device 200 through calculation is not specifically limited in this embodiment of this application.

Therefore, in the positioning method in this application, the first electronic device 100 determines the coordinate system of the UWB system (including determining the three axes and directions of the three axes) based on the antenna structure configured by the first electronic device 100, and obtains, through measurement based on the antenna structure of the first electronic device 200, the location of the second electronic device 200 and the direction relative to the first electronic device 100. It can be learned that, according to the positioning method provided in this embodiment of this application, positioning of the second electronic device 200 based on one first electronic device 100 is implemented. In addition, when the location of the first electronic device 100 changes, the first electronic device 100 may directly continue to measure a location and a direction of another device (for example, the second electronic device 200) without re-determining the coordinate system. It can be learned that, in this application, positioning efficiency of the first electronic device 100 is high, and mobility is good.

In some other embodiments of this application, the second electronic device 200 is configured with an IMU module, so that a combination of the UWB-based positioning method and an IMU-based positioning method may be used. This helps reduce an error caused by a non-line-of-sight environment during UWB system positioning, and also helps to suppress an accumulated error of IMU, to improve positioning accuracy and continuity.

In the IMU-based positioning method, the IMU module measures the acceleration of the second electronic device 200 in the carrier coordinate system (the b system, where an origin of the b system is located on the second electronic device 200) and the angular velocity of the b system around three axes in the geographical coordinate system (the t system), and calculates the posture of the second electronic device 200. Then, the moving track of the second electronic device 200 is determined based on the posture change of the second electronic device 200. Further, with reference to locations that are of the second electronic device 200 and that are measured by using the UWB-based positioning method at some moments, a cumulative error of the moving track obtained by using the IMU-based positioning method may be corrected, to obtain an accurate moving track, and improve positioning accuracy. Alternatively, in the UWB-based positioning method, a real-time location of the second electronic device 200 may be calculated in combination with a moving track obtained in the IMU-based positioning method in an area with a poor UWB signal quality, to provide continuous navigation information. When both the IMU-based positioning method and the UWB-based positioning method are used, this method is also called joint positioning method.

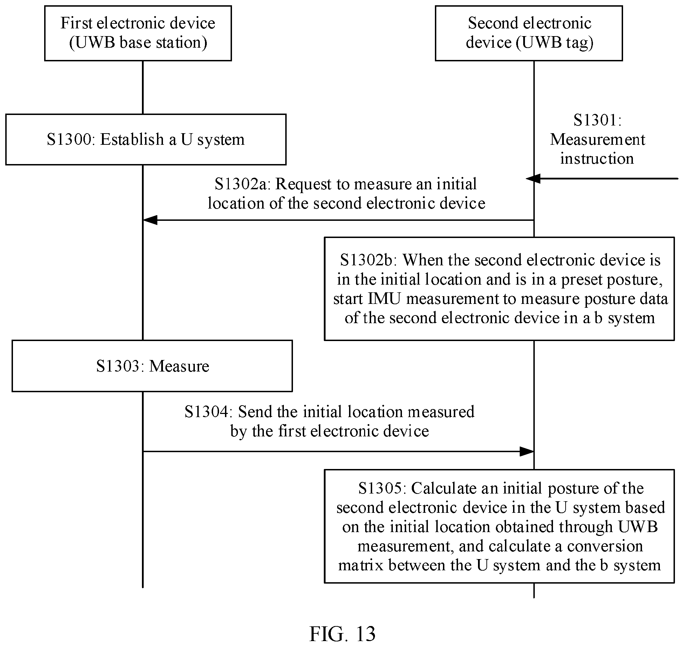

FIG. 13 is a schematic flowchart of a control method based on an IMU and a UWB according to an embodiment of this application. The method is as follows:

S1300: A first electronic device establishes a U system.

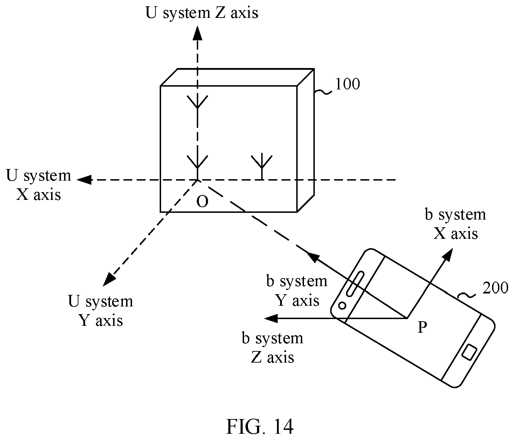

As shown in FIG. 14, the first electronic device 100 establishes the U system that uses a point O as an origin. For a method for establishing the U system by the first electronic device 100, refer to the related description in the foregoing embodiment. Details are not described herein again.

S1301: A second electronic device receives a measurement instruction of a user.

For example, the user may instruct the second electronic device to start measuring a location by operating a virtual control (for example, a control displayed on a touchscreen) or a physical button on the second electronic device 200, entering a voice command, or executing a preset air gesture. Alternatively, the user may enable a preset function of the second electronic device 200. When determining that the preset function requires the location of the second electronic device 200, the second electronic device 200 may automatically start measuring the location of the second electronic device 200, that is, the second electronic device 200 may directly perform step S1302a and step S1302b.

S1302a: The second electronic device requests the first electronic device to measure an initial location of the second electronic device.

As shown in FIG. 14, when the second electronic device 200 is located at a point P, the second electronic device 200 sends a UWB signal to the first electronic device 100, to request to measure a current location of the second electronic device 200, that is, to request to measure coordinates of the point P in the U system, which are denoted as $(x_p, y_p, z_p)$. In this case, the location of the point P may be considered as the initial location of the second electronic device.

S1302b: When the second electronic device is in the initial location and is in a preset posture, the second electronic device starts IMU measurement, to measure posture data of the second electronic device in a b system.

It should be noted that step S1302a and step S1302b may be performed simultaneously, or may be performed sequentially. An execution sequence of the two steps is not limited in this embodiment of this application.

In some examples, after receiving the measurement instruction of the user, or when determining to start measuring the location of the second electronic device 200, the second electronic device 200 may prompt the user to perform a preset operation. The preset operation may enable the second electronic device 200 to be in the preset posture and start the IMU measurement. The preset posture may be, for example, the user operates the second electronic device 200, so that a specific direction of a coordinate axis (for example, a Y axis of a carrier coordinate system, also referred to as a Y axis of the second electronic device) of the second electronic device 200 is aligned with the first electronic device 100. The posture data obtained through IMU measurement includes angular velocities (denoted as $\varpi_x^b$, $\varpi_y^b$, and $\varpi_z^b$ respectively), and accelerations (denoted as $a_x^b$, $a_y^b$, and $a_z^b$ respectively).

It should be noted that, the location that is of the second electronic device 200 and that is subsequently obtained by the first electronic device 100 through measurement is coordinates in the U system, and the posture data measured by an IMU module 270 when the IMU module 270 is started by the second electronic device 200 is posture data in the b system. Therefore, during subsequent joint positioning, the posture data in the b system needs to be converted into posture data in the U system. When the second electronic device 200 is in the preset posture, an association between the U system and the b system may be established, that is, the b system herein may be considered to be obtained by rotating the U system along the three axes of the U system. In addition, the preset posture may also be considered as an initial posture of the second electronic device 200 when the IMU module 270 performs measurement. In subsequent step S1305, the initial posture in the U system and a specific calculation method of a conversion matrix between the U system and the b system are described in detail.

S1303: The first electronic device measures the initial location of the second electronic device.

The first electronic device 100 measures a distance $r_p$ of the second electronic device 200 by using a two-way ranging method, and calculates a direction (for example, a horizontal direction $\alpha$ and a vertical direction $\beta$ of a signal) of the second electronic device 200 by using a difference between phases in which the UWB signal sent by the second electronic device 200 arrives at different antennas, to obtain coordinates $(x_p, y_p, z_p)$ of the second electronic device 200 in the U system. For a specific measurement method, refer to related content in the foregoing description, and details are not described herein again.

S1304: The first electronic device returns the measured initial location of the second electronic device to the second electronic device.

S1305: The second electronic device calculates the initial posture in the U system based on the initial location obtained through UWB measurement, and calculates the conversion matrix between the U system and the b system.

An example in which the user operates the second electronic device 200 so that a positive direction of the Y axis of the second electronic device 200 is aligned with the first electronic device 100 is used for description. As shown in FIG. 14, based on the foregoing steps, the first electronic device 100 obtains the coordinates $(x_p, y_p, z_p)$ of the second electronic device 200 in the UWB system through calculation, and it may be considered that coordinates of the origin P in the b system as $(x_p, x_p, z_p)$. In this case, coordinates of the origin O of the U system in the b system are $(0, r_p, 0)$.

Because the b system can be considered to be obtained by rotating the U system along the three axes of the U system, a rotation process can be represented by three attitude angles, which are respectively a heading angle $\psi$, a pitch angle $\varphi$, and a roll angle $\theta$. It may be understood that the three attitude angles may also be considered as attitude angles of the second electronic device 200 in the U system, that is, the initial attitude of the second electronic device 200 may be represented by the heading angle $\psi$, the pitch angle $\varphi$, and the roll angle $\theta$.

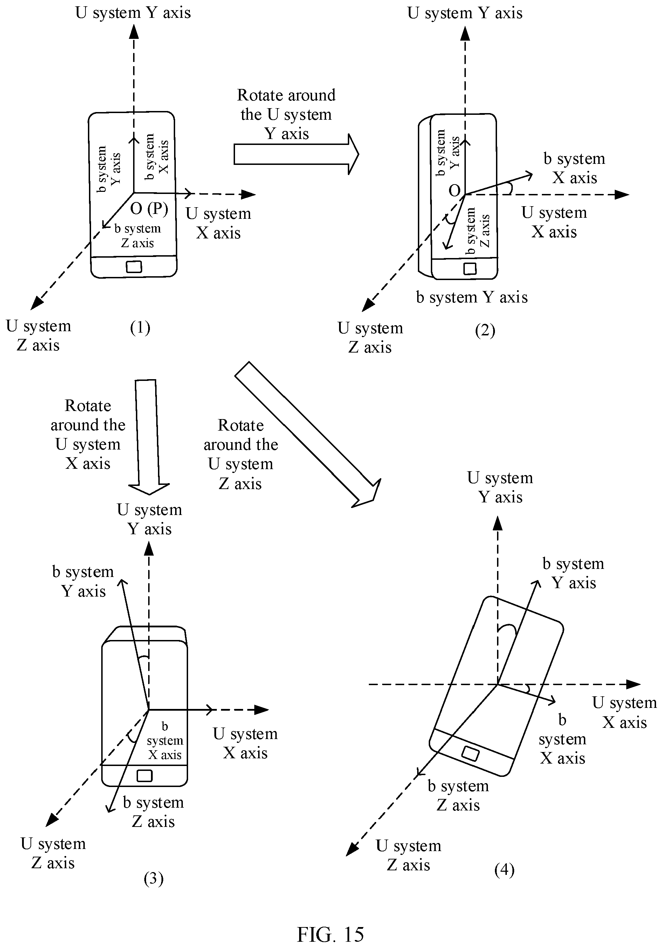

The following describes meanings of the b system and the attitude angle by using an example in which the second electronic device is a mobile phone with reference to FIG. 15.

As shown in (1) in FIG. 15, a Y axis and an X axis of the b system (that is, a coordinate system of the mobile phone) are directions parallel to a screen plane of the mobile phone, and a Z axis of the b system is a direction perpendicular to the screen of the mobile phone. The Y axis of the b system is a direction along a length of the mobile phone, and the X axis of the b system is a direction along a width of the mobile phone. In addition, at this time, the b system coincides with the U system.

The roll angle $\theta$ is an included angle between the Z axis of the b system and a vertical plane including the Y axis of the b system, and tilting of the mobile phone to the right is considered as a positive direction. For example, after the mobile phone as shown in (1) in FIG. 15 is rotated by a specific angle along a Y axis of the U system, a location shown in (2) in FIG. 15 is presented. After rotation, the Y axis of the b system still coincides with the Y axis of the U system, but the X axis and Z axis of the b system form a specific angle with an X axis and a Z axis of the U system respectively, and the angle is equal to the roll angle $\theta$.

The pitch angle $\varphi$ is an included angle between the Y axis of the b series and an XOY plane (that is, the plane of the X axis and the Y axis of the U system are located) of the U system, and a head-up direction of the second electronic device 200 is considered as a positive direction.

For example, after the mobile phone as shown in (1) in FIG. 15 is rotated by a specific angle along the X axis of the U system, a location shown in (3) in FIG. 15 is presented. After rotation, the X axis of the b system still coincides with the X axis of the U system, but the Y axis and Z axis of the b system form a specific angle with the Y axis and Z axis of the U system respectively, and the angle is equal to the pitch angle $\varphi$.

The heading angle $\psi$ is an included angle between a projection of the Y axis of the b system in the XOY plane of the U system and the Y axis of the U system, and a right yaw of a head of the second electronic device 200 is considered as a positive direction.

For example, after the mobile phone as shown in (1) in FIG. 15 is rotated by a specific angle along the X axis of the U system, a location shown in (4) in FIG. 15 is presented. After rotation, the Z axis of the b system still coincides with the Z axis of the U system, but the X axis and Y axis of the b system form a specific angle with the X axis and Y axis of the U system respectively, and the angle is equal to the heading angle $\psi$.

In addition, a conversion matrix $C_U^b$ of the U system and the b system is obtained through calculation by using Formula (7), which is as follows:

$$C_U^b = \begin{bmatrix} \cos\theta\cos\psi - \sin\varphi\sin\theta\sin\psi & -\cos\varphi\sin\psi & \sin\theta\cos\psi + \sin\varphi\cos\theta\sin\psi \\ \cos\theta\sin\psi + \sin\varphi\sin\theta\cos\psi & \cos\varphi\cos\psi & \sin\theta\sin\psi + \sin\varphi\cos\theta\cos\psi \\ \cos\varphi\sin\theta & \sin\varphi & \cos\varphi\cos\theta \end{bmatrix}$$

Formula (7)

Because the coordinates of the point P in the U system are $(x_p, y_p, z_p)$, a vector OP in the U system may be

expressed as $\begin{bmatrix} x_p \\ y_p \\ z_p \end{bmatrix}$.

In addition, because the second electronic device 200 is in the preset posture at the point P, that is, the user operates the Y axis of the second electronic device 200 (that is, the Y axis of the b system) to point to the first electronic device 100, the vector OP is located on the Y axis of the b system, and the vector OP in the b system may be expressed

as $\begin{bmatrix} 0 \\ -r_p \\ 0 \end{bmatrix}$. Formula (8) may be obtained based on the conversion matrix of the U system and the b system, which is as follows:

$$\begin{bmatrix} x_p \\ y_p \\ z_p \end{bmatrix} = C_U^b \begin{bmatrix} 0 \\ -r_p \\ 0 \end{bmatrix} \quad \text{Formula (8)}$$

According to Formula (7) and Formula (8), the following may be obtained through calculation:

$$\psi = \arctan(-\frac{x_p}{y_p}) \qquad \varphi = \arcsin(-\frac{z_p}{r_p})$$

; and

In some examples, the second electronic device 200 is located in the positive direction of the Y axis of the U system. In this case, a Formula (9) may be obtained through calculation based on an expression of a vector of gravity in the U system and an expression in the b system. The Formula (9) is as follows:

$$\begin{bmatrix} 0 \\ 0 \\ g^U \end{bmatrix} = C_U^b \square \begin{bmatrix} a_x^b \\ a_y^b \\ a_z^b \end{bmatrix} \qquad \text{Formula (9)}$$

$g^U$ is a gravitational acceleration of the second electronic device 200 in the U system, and is a known value. The second electronic device 200 may measure $a_x^b$, $a_y^b$, and $a_z^b$ by using the IMU module 270. $a_x^b$ is an acceleration of the second electronic device 200 on the X axis of the b system, $a_y^b$ is an acceleration of the second electronic device 200 on the Y axis of the b system, and $a_z^b$ is an acceleration of the second electronic device 200 on the Z axis of the b system.

Formula (10) may be obtained by substituting Formula (7) into Formula (9), and Formula (10) is as follows:

$$g^U = -a_x^b \cos\varphi\sin\theta + a_y^b \sin\varphi + a_z^b \cos\varphi\cos\theta \qquad \text{Formula (10)}$$

According to Formula (10), $\theta$ is obtained by solving by using a Newton iteration method, where $\theta \in (0, 2\pi)$.

Therefore, the initial posture ($\psi$, $\varphi$, and $\theta$) of the second electronic device 200 and the coordinate conversion matrix $C_U^b$ between the U system and the b system are obtained.

Subsequently, the second electronic device may calculate the moving track of the second electronic device in the U system based on the initial posture of the U system, the conversion matrix between the U system and the b system, and the posture data measured by the IMU. Optionally, joint positioning or joint navigation may be further performed based on the calculated moving track of the second electronic device in the U system and the location measured by the first electronic device.

Alternatively, the second electronic device may obtain posture information of the second electronic device in the U system based on the conversion matrix between the U system and the b system and the posture data measured by the IMU, and perform related operations corresponding to the posture information. Optionally, the posture information and a preset operation corresponding to the location may be performed based on the posture information of the second electronic device in the U system and the location measured by the first electronic device.

In conclusion, a specific application after the U-system coordinates are established, and the preset posture of the second electronic device and the conversion matrix between the U system and the b system are obtained through calculation is not limited in this embodiment of this application.

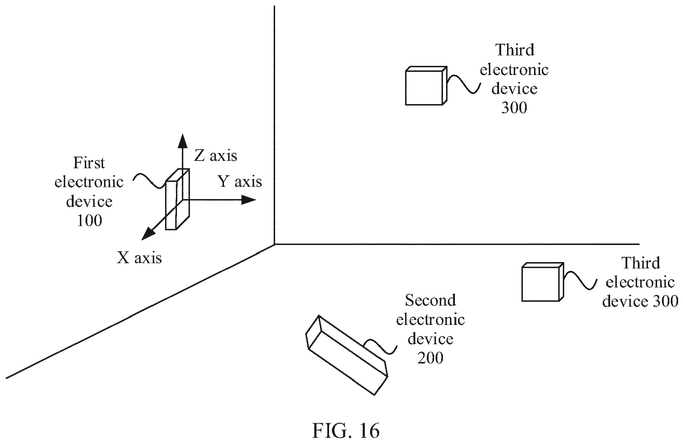

In still some embodiments of this application, as shown in FIG. 16, in addition to the first electronic device 100 and the second electronic device 200 having a specific antenna architecture (for example, a three-antenna architecture), the UWB system may further include one or more third electronic devices 300 having another antenna architecture (for example, a single-antenna architecture).

In some examples, the first electronic device 100 may be used to perform preliminary positioning on the second electronic device 200, then a distance between the second electronic device 200 and a third electronic device 300 is measured by using the third electronic device 300, and the preliminary positioning of the second electronic device 200 measured by the first electronic device 100 is further corrected, to obtain more accurate positioning of the second electronic device 200.

For example, by using the foregoing positioning method, the first electronic device 100 may obtain coordinates of the third electronic device 300 through measurement, and the coordinates are denoted as $(x_k, y_k, z_k)$, where k = 1, 2, ..., and n. n is an integer greater than or equal to 1, and the UWB system includes n third electronic devices 300.

First, an initial value $(x_0, y_0, z_0)$ of a location of the second electronic device 200 is measured by using the first electronic device 100, as shown in Formula (11):

$$\begin{cases} x_0 = r\sin(\alpha) \\ y_0 = r\cos(\alpha) \\ z_0 = r\sin(\beta) \end{cases} \quad \text{Formula (11)}$$

r is a distance that is between the second electronic device 200 and the first electronic device 100 and that is obtained by the first electronic device 100 through measurement, and $\alpha$ and $\beta$ are directions of the second electronic device 200 relative to the first electronic device 100.

Then, a distance $r_k$ between each third electronic device 300 and the second electronic device 200 is calculated, where k = 1, 2, ..., and n. An equation set of Formula (12) is established by using the distance between each third electronic device 300 and the second electronic device 200, where (x, y, z) are coordinates of the to-be-calculated second electronic device 200.

$$\sqrt{(x_k - x)^2 + (y_k - y)^2 + (z_k - z)^2} = r_k, \text{ where k = 1, 2, ..., and n} \quad \text{Formula (12)}$$

Formula (13) is established by using the distance between the first electronic device 100 and the second electronic device 200, and Formula (13) is as follows:

$$\begin{cases} x = r\sin(\alpha) \\ y = r\cos(\alpha) \\ z = r\sin(\beta) \end{cases} \quad \text{Formula (13)}$$

For Formula (12) and Formula (13), Newton iteration and a least squares algorithm are used to perform solving, to obtain corrected coordinates of the second electronic device 200. It should be noted that, in a process of using Newton iteration, only linearization needs to be performed on Formula (12), and the initial value $(x_0, y_0, z_0)$ of the location of the second electronic device 200 is used as an initial value of Newton iteration for iteration.

It can be learned that positioning accuracy of the second electronic device 200 may be improved by using measurement data of the third electronic device 300.

In some other solutions of this example, when there are three or more third electronic devices 300, the location of the second electronic device 200 may be determined based on a triangulation positioning principle. In this case, correction may be performed on the location that is of the second electronic device 200 and that is measured by the first electronic device 100 based on the location that is of the second electronic device 200 and that is determined by the three third electronic devices 300, for example, correction is performed by using a Kalman filtering method, or correction is performed by using another method. This is not specifically limited in this embodiment of this application.

In addition, when the first electronic device 100 receives a poor signal of the second electronic device 200, the first electronic device 100 may improve continuous positioning of the second electronic device 200 based on the location that is of the second electronic device 200 and that is measured by the three third electronic devices 300.

In some other solutions of this example, after coordinates of the at least three third electronic devices 300 in the U system are measured by using the first electronic device 100, the at least three third electronic devices 300 may be directly used subsequently, based on the triangulation positioning principle, to locate the second electronic device 200. In other words, the first electronic device 100 may be used to quickly establish a U-system coordinate system, measure coordinates of the third electronic device 300 that is subsequently used for positioning, and then directly use the third electronic device 300 to measure the location of the second electronic device 200. In this case, the first electronic device 100 may be removed. It can be learned that, in this solution, the third electronic device 300 that is subsequently used for positioning does not need to be installed or placed strictly on a specific location, so that an operation of establishing a UWB system by a user can be simplified.

It may be understood that to implement the foregoing functions, the terminal or the like includes corresponding hardware structures and/or software modules for performing the functions. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of the present invention.

In embodiments of this application, the terminal may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that in embodiments of the present invention, module division is an example, and is merely a logical function division. During actual implementation, another division manner may be used.

Based on the foregoing descriptions of the implementations, a person skilled in the art may clearly understand that for the purpose of convenient and brief descriptions, division into the foregoing function modules is merely used as an example for description. During actual application, the foregoing functions can be allocated to different function modules for implementation based on a requirement, that is, an inner structure of an apparatus is divided into different function modules to implement all or some of the functions described above. For a specific working process of the foregoing system, apparatus, and unit, refer to a corresponding process in the foregoing method embodiments, and details are not described herein again.

Function units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a computer-readable storage medium. Based on such an understanding, the technical solutions in embodiments of this application essentially, or the part contributing to the conventional technology, or all or some of the technical solutions may be implemented in a form of a software product. The computer software product is stored in a storage medium, and includes several instructions for instructing a computer device (which may be a personal computer, a server, or a network device) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims. of the b system, and the vector OP in the b system may be expressed as $\begin{bmatrix} 0 \\ -r_p \\ 0 \end{bmatrix}$ . Formula (8) may be obtained based on the conversion matrix of the U system and the b system, which is as follows:

$$\begin{bmatrix} x_p \\ y_p \\ z_p \end{bmatrix} = C_U^b \cdot \begin{bmatrix} 0 \\ -r_p \\ 0 \end{bmatrix} \qquad \text{Formula (8)}$$

According to Formula (7) and Formula (8), the following may be obtained through calculation:

$$\psi = \arctan(-\frac{x_p}{y_p}) ; \text{ and } \quad \varphi = \arcsin(-\frac{z_p}{r_p}) .$$

In some examples, the second electronic device 200 is located in the positive direction of the Y axis of the U system. In this case, a Formula (9) may be obtained through calculation based on an expression of a vector of gravity in the U system and an expression in the b system. The Formula (9) is as follows:

$$\begin{bmatrix} 0 \\ 0 \\ g^U \end{bmatrix} = C_U^b \bullet \begin{bmatrix} a_x^b \\ a_y^b \\ a_z^b \end{bmatrix} \qquad \text{Formula (9)}$$

$g^U$ is a gravitational acceleration of the second electronic device 200 in the U system, and is a known value. The second electronic device 200 may measure $a_x^b$, $a_y^b$, and $a_z^b$ by using the IMU module 270. $a_x^b$ is an acceleration of the second electronic device 200 on the X axis of the b system, $a_y^b$ is an acceleration of the second electronic device 200 on the Y axis of the b system, and $a_z^b$ is an acceleration of the second electronic device 200 on the Z axis of the b system.

Formula (10) may be obtained by substituting Formula (7) into Formula (9), and Formula (10) is as follows:

$$g^U = -a_x^b \cos\varphi\sin\theta + a_y^b \sin\varphi + a_z^b \cos\varphi\cos\theta \qquad \text{Formula (10)}$$

According to Formula (10), $\theta$ is obtained by solving by using a Newton iteration method, where $\theta \in (0, 2\pi)$.

**Claims**

1. A first electronic device, wherein the first electronic device comprises at least three antennas, the at least three antennas are fastened in the first electronic device, any two of the at least three antennas have a distance difference in a vertical direction and/or a horizontal direction, a distance between any two of the at least three antennas is less than or equal to a threshold, and the at least three antennas are configured to send and receive UWB signals;

   the first electronic device is installed in a first direction; and
   the first electronic device is configured to: receive a first UWB signal sent by a second electronic device, and measure a location of the second electronic device in a first coordinate system based on the first UWB signal, wherein the first coordinate system is determined based on a structural relationship between the at least three antennas.

2. The first electronic device according to claim 1, wherein the threshold is a wavelength of a UWB signal received by the first electronic device.

3. The first electronic device according to claim 1 or 2, wherein that any two of the at least three antennas have a distance difference in a vertical direction and/or a horizontal direction comprises:
   the at least three antennas are in an L-shaped structural relationship on a vertical plane or a horizontal plane, or the at least three antennas are in a triangular structural relationship on a vertical plane or a horizontal plane.

4. The first electronic device according to claim 3, wherein the at least three antennas comprise a first antenna, a second antenna, and a third antenna;
   that the at least three antennas are in an L-shaped structural relationship on a vertical plane or a horizontal plane comprises:

   a connection line between the first antenna and the second antenna is perpendicular to a connection line between the first antenna and the third antenna; and both a distance between the first antenna and the second antenna and a distance between the first antenna and the third antenna are half of the wavelength of the UWB signal; and
   that the at least three antennas are in a triangular structural relationship on a vertical plane or a horizontal plane comprises:
   a distance between the first antenna and the second antenna, a distance between the first antenna and the third antenna, and a distance between the second antenna and the third antenna are all half of the wavelength of the UWB signal received by the first electronic device.

5. The first electronic device according to claim 4, wherein that the first coordinate system is determined based on a structural relationship between the at least three antennas comprises:

an origin of the first coordinate system is a location of the first antenna;
an X axis of the first coordinate system is located on the connection line between the first antenna and the second antenna, and a positive direction of the X axis is a direction from the second antenna to the first antenna;
a Y axis of the first coordinate system is a direction perpendicular to the X axis on the horizontal plane; and
a Z axis of the first coordinate system is located on a vertical line, and a positive direction of the Z axis is opposite to a gravity direction.

6. The first electronic device according to any one of claims 1 to 3, wherein the at least three antennas comprise a first antenna, a second antenna, a third antenna, and a fourth antenna, and that any two of the at least three antennas have a distance difference in a vertical direction and/or a horizontal direction comprises:

a connection line between the first antenna and the second antenna is parallel to the horizontal plane, and a connection line between the third antenna and the fourth antenna is perpendicular to the horizontal plane; and
the connection line between the third antenna and the fourth antenna is perpendicular to the connection line between the third antenna and the fourth antenna on a same vertical plane;
an origin of the first coordinate system is an intersection point of the connection line between the first antenna and the second antenna and the connection line between the third antenna and the fourth antenna;
an X axis of the first coordinate system is located on the connection line between the first antenna and the second antenna, and a positive direction of the X axis is a direction from the second antenna to the first antenna;
a Y axis of the first coordinate system is a direction perpendicular to the X axis on the horizontal plane; and
a Z axis of the first coordinate system is located on the connection line between the third antenna and the fourth antenna, and a positive direction of the Z axis is opposite to a gravity direction.

7. The first electronic device according to any one of claims 1 to 6, wherein a mark is disposed on the first electronic device, and a direction indicated by the mark is the first direction; and
the first direction is the same as the positive direction of the Z axis in the first coordinate system or opposite to the gravity direction.

8. The first electronic device according to any one of claims 1 to 7, wherein that the first electronic device measures the location of the second electronic device in the first coordinate system based on the first UWB signal comprises:

the first electronic device measures a first distance between the second electronic device and the first electronic device and a first direction of the second electronic device relative to the first electronic device based on the first UWB signal; and
the first electronic device determines the location of the second electronic device in the first coordinate system based on the first distance and the first direction.

9. The first electronic device according to claim 8, wherein that the first electronic device measures a first distance between the second electronic device and the first electronic device and a first direction of the second electronic device relative to the first electronic device based on the first UWB signal comprises:

the first electronic device measures the first distance between the second electronic device and the first electronic device by using a two-way ranging method; and
the first electronic device determines the first direction based on a phase difference of a second UWB signal that is sent by the second electronic device and that is received by different antennas in the at least three antennas.

10. The first electronic device according to claim 8, wherein that the first electronic device measures the first direction of the second electronic device relative to the first electronic device based on the first UWB signal further comprises:
the first electronic device determines the first direction based on a phase difference of a second UWB signal that is sent by the second electronic device and that is received by different antennas in the at least three antennas, a wavelength of the second UWB signal, and a distance between different antennas in the at least three antennas.

**11.** The first electronic device according to claim 10, wherein the first direction comprises a first angle $\alpha$ and a second angle $\beta$, the first angle $\alpha$ is an included angle between a horizontal direction that is of the second UWB signal sent by the second electronic device and that is measured by the first electronic device and the X axis in the first coordinate system, and the second angle $\beta$ is an included angle between a vertical direction that is of the second UWB signal sent by the second electronic device and that is measured by the first electronic device and the Z axis in the first coordinate system.

**12.** The first electronic device according to claim 11, wherein when the at least three antennas in the first electronic device are in the L-shaped structural relationship,

the first angle $\alpha = \arccos(\dfrac{\Delta\varphi_1 \times (\lambda/2\pi)}{L1})$ ; and

the second angle $\beta = \arcsin(\dfrac{\Delta\varphi_2 \times (\lambda/2\pi)}{L2})$ , wherein

$\Delta\varphi_1 = \varphi_1 - \varphi_0$, $\varphi_0$ is a phase of the second UWB signal measured by the first antenna, $\varphi_1$ is a phase of the second UWB signal measured by the second antenna, $\lambda$ is the wavelength of the second UWB signal, and L1 is a distance between the first antenna and the second antenna; and $\Delta\varphi_2 = \varphi_2 - \varphi_0$, $\varphi_2$ is a phase of the second UWB signal measured by the third antenna, and L2 is a distance between the first antenna and the third antenna.

**13.** The first electronic device according to claim 11 or 12, wherein that the first electronic device determines the location of the second electronic device in the first coordinate system based on the first distance and the first direction specifically comprises:

$$\begin{cases} x = r\sin(\alpha) \\ y = r\cos(\alpha), \\ z = r\sin(\beta) \end{cases}$$

wherein
r is the distance that is between the second electronic device and the first electronic device and that is measured by the first electronic device, and (x, y, z) are coordinates of the second electronic device in the first coordinate system.

**14.** The first electronic device according to any one of claims 1 to 13, wherein the first electronic device is further configured to: after the first electronic device measures the location of the second electronic device in the first coordinate system based on the first UWB signal, send the location of the second electronic device in the first coordinate system to the second electronic device.

**15.** An indoor positioning method, applied to a system comprising a first electronic device and a second electronic device, wherein the first electronic device comprises at least three antennas, and the at least three antennas are fastened in the first electronic device; any two of the at least three antennas have a distance difference in a vertical direction and/or a horizontal direction, and a distance between any two of the at least three antennas is less than or equal to a threshold; the first electronic device is installed in a first direction; and the method comprises:

receiving, by the first electronic device, a first UWB signal sent by the second electronic device; and
measuring, by the first electronic device, a location of the second electronic device in a first coordinate system based on the first UWB signal, wherein the first coordinate system is determined based on a structural relationship between the at least three antennas.

**16.** The method according to claim 15, wherein the measuring, by the first electronic device, a location of the second electronic device in a first coordinate system based on the first UWB signal comprises:

measuring, by the first electronic device, a first distance between the second electronic device and the first electronic device and a first direction of the second electronic device relative to the first electronic device based on the first UWB signal; and
determining, by the first electronic device, the location of the second electronic device in the first coordinate system based on the first distance and the first direction.

17. The method according to claim 16, wherein the measuring, by the first electronic device, a first distance between the second electronic device and the first electronic device and a first direction of the second electronic device relative to the first electronic device based on the first UWB signal comprises:

measuring, by the first electronic device, the first distance between the second electronic device and the first electronic device by using a two-way ranging method; and
determining, by the first electronic device, the first direction based on a phase difference of a second UWB signal that is sent by the second electronic device and that is received by different antennas in the at least three antennas.

18. The method according to claim 16, wherein the measuring, by the first electronic device, a first direction of the second electronic device relative to the first electronic device based on the first UWB signal further comprises:
determining, by the first electronic device, the first direction based on a phase difference of a second UWB signal that is sent by the second electronic device and that is received by different antennas in the at least three antennas, a wavelength of the second UWB signal, and a distance between different antennas in the at least three antennas.

19. The method according to any one of claims 15 to 18, wherein after the measuring, by the first electronic device, a location of the second electronic device in a first coordinate system based on the first UWB signal, the method further comprises:
sending, by the first electronic device, the location of the second electronic device in the first coordinate system to the second electronic device.

20. An indoor positioning system, comprising a first electronic device and a second electronic device, wherein the first electronic device comprises at least three antennas, and the at least three antennas are fastened in the first electronic device; any two of the at least three antennas have a distance difference in a vertical direction and/or a horizontal direction, and a distance between any two of the at least three antennas is less than or equal to a threshold; and the first electronic device is installed in a first direction;

the second electronic device is configured to send a first UWB signal to the first electronic device; and
the first electronic device is configured to receive the first UWB signal, and measure a location of the second electronic device in a first coordinate system based on the first UWB signal, wherein the first coordinate system is determined based on a structural relationship between the at least three antennas.

21. A computer-readable storage medium, comprising computer instructions, wherein when the computer instructions are run on a first electronic device, the first electronic device is enabled to perform the indoor positioning method according to any one of claims 15 to 19.

22. A computer-readable storage medium, comprising computer instructions, wherein when the computer instructions are run on a second electronic device, the second electronic device is enabled to perform the indoor positioning method according to any one of claims 15 to 19.

Base station 1
(0, r, 0)

Y axis

Z axis

Base
station 0
(0, 0, 0)

X axis

Base station 2
(x, y, 0)

FIG. 1

FIG. 2

First electronic device 100

FIG. 3

100

Antenna 2

Antenna 0   Antenna 1

(1)

100

Antenna 0   Antenna 1

Antenna 2

(2)

100

Antenna 1   Antenna 0

Antenna 2

(3)

100

Antenna 2

Antenna 1   Antenna 0

(4)

Direction perpendicular to a
horizontal plane

Notes:

Direction
parallel to the
horizontal plane

FIG. 4

FIG. 5

100

Antenna 2

Antenna 0 Antenna 1

(1)

100

Antenna 0 Antenna 1

Antenna 2

(2)

100

Antenna 2

Antenna 1

Antenna 0

(3)

100

Antenna 1

Antenna 0

Antenna 2

(4)

100

Antenna 2

Antenna 0 Antenna 1

(5)

100

Antenna 0 Antenna 1

Antenna 2

(6)

Direction perpendicular to a horizontal plane

Notes:

Direction parallel
to the horizontal
plane

FIG. 6A

Antenna 2  Antenna 3

Antenna 0  Antenna 1

(1)

Antenna 2

Antenna 3  Antenna 1

Antenna 0

(2)

Antenna 2

Antenna 0  Antenna 1

Antenna 3

(3)

Antenna 3

Antenna 2

Antenna 0  Antenna 1

(4)

FIG. 6B

Second electronic device 200

Memory [220]

USB interface [230]

Power module [240]

Processor [210]

UWB module [250]

Antenna module (for example, single-antenna architecture)

IMU module [270]

Wireless communication module [260]

FIG. 7

Z axis

Side A

Side B

801

Antenna 2

X axis

Antenna 0

Antenna 1

Y axis

(1)

Z axis

802

This side faces upward

Antenna 2

X axis

Antenna 0

Antenna 1

Side B

Side A

Y axis

(2)

Z axis

Antenna 2

X axis

Antenna 0

Antenna 1

Y axis

(3)

Z axis

Antenna 2

This side faces upward

Antenna 0

Antenna 1

X axis

Y axis

(4)

FIG. 8A

FIG. 8B

FIG. 9

FIG. 10

FIG. 11

FIG. 12

First electronic device
(UWB base station)

Second electronic
device (UWB tag)

S1301:
Measurement
instruction

S1300: Establish a U system

S1302a: Request to measure an initial
location of the second electronic device

S1302b: When the second electronic device is
in the initial location and is in a preset posture,
start IMU measurement to measure posture data
of the second electronic device in a b system

S1303: Measure

S1304: Send the initial location measured
by the first electronic device

S1305: Calculate an initial posture of the
second electronic device in the U system based
on the initial location obtained through UWB
measurement, and calculate a conversion
matrix between the U system and the b system

FIG. 13

FIG. 14

U system Y axis

Rotate around
the U system
Y axis

U system Y axis

b system
Y axis

b system
X axis

O (P)

U system
X axis

b system
Z axis

U system
Z axis

(1)

b system
Y axis

O

b system
X axis

b system
Z axis

U system
X axis

b system Y axis

U system
Z axis

(2)

Rotate
around the
U system
X axis

Rotate
around the
U system
Z axis

U system
Y axis

b system
Y axis

U system
X axis

b
system
X axis

b system
Z axis

U system
Z axis

(3)

U system
Y axis

b system
Y axis

U system
X axis

b
system
X axis

b system
Z axis

U system
Z axis

(4)

FIG. 15

FIG. 16

## INTERNATIONAL SEARCH REPORT

| International application No. |
|---|
| **PCT/CN2021/136881** |

**A. CLASSIFICATION OF SUBJECT MATTER**

H04W 4/33(2018.01)i; G01S 5/02(2010.01)i

According to International Patent Classification (IPC) or to both national classification and IPC

**B. FIELDS SEARCHED**

Minimum documentation searched (classification system followed by classification symbols)

H04W; G01S

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; 3GPP: 设备, 终端, 三, 三维, 天线, 垂直, 水平, 超宽带, 定位, UWB, Ultra-Wide Band, three, 3D, antenna?, position+, level, perpendicularity, perpendicular

**C. DOCUMENTS CONSIDERED TO BE RELEVANT**

| Category* | Citation of document, with indication, where appropriate, of the relevant passages | Relevant to claim No. |
|---|---|---|
| X | CN 106680763 A (NINEBOT (BEIJING) TECHNOLOGY CO., LTD.) 17 May 2017 (2017-05-17) description paragraphs [0044]-[0122] | 1-22 |
| A | CN 107368066 A (NINEBOT (BEIJING) TECHNOLOGY CO., LTD.) 21 November 2017 (2017-11-21) entire document | 1-22 |
| A | CN 101799530 A (GUANGZHOU GUANGLIAN ELECTRIC TECHNOLOGY CO., LTD. et al.) 11 August 2010 (2010-08-11) entire document | 1-22 |
| A | CN 108051778 A (WU, Yunfa) 18 May 2018 (2018-05-18) entire document | 1-22 |
| A | WO 2020050511 A1 (AMOTECH CO., LTD.) 12 March 2020 (2020-03-12) entire document | 1-22 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 February 2022** | **23 February 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/136881**

| Patent document cited in search report | | | Publication date (day/month/year) | Patent family member(s) | | | Publication date (day/month/year) |
|---|---|---|---|---|---|---|---|
| CN | 106680763 | A | 17 May 2017 | WO | 2018090477 | A1 | 24 May 2018 |
| | | | | JP | 2019532285 | A | 07 November 2019 |
| | | | | JP | 6709330 | B2 | 10 June 2020 |
| | | | | KR | 20190038908 | A | 09 April 2019 |
| | | | | EP | 3489708 | A1 | 29 May 2019 |
| | | | | EP | 3489708 | A4 | 18 September 2019 |
| | | | | US | 2021286038 | A1 | 16 September 2021 |
| | | | | CN | 106680763 | B | 03 July 2020 |
| CN | 107368066 | A | 21 November 2017 | WO | 2018228604 | A1 | 20 December 2018 |
| CN | 101799530 | A | 11 August 2010 | CN | 101799530 | B | 06 June 2012 |
| CN | 108051778 | A | 18 May 2018 | None | | | |
| WO | 2020050511 | A1 | 12 March 2020 | KR | 20200026633 | A | 11 March 2020 |
| | | | | US | 2021320681 | A1 | 14 October 2021 |
| | | | | CN | 112997411 | A | 18 June 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011636500